# EUROPÄISCHE PATENTSCHRIFT

(11) **EP 2 526 072 B1**
(45) Veröffentlichungstag und Bekanntmachung des Hinweises auf die Patenterteilung: **30.03.2016**
(21) Anmeldenummer: 11700193.3
(22) Anmeldetag: 17.01.2011
(51) Int. Cl.: C04B 24/26, C04B 40/00

(54) **DISPERGIERMITTEL**
DISPERSING AGENT
AGENT DE DISPERSION

(30) Priorität: 21.01.2010 EP 10151309
(43) Veröffentlichungstag der Anmeldung: 28.11.2012
(73) Patentinhaber: BASF Construction Polymers GmbH, 83308 Trostberg (DE)
(72) Erfinder: BICHLER, Manfred, 84549 Engelsberg (DE); FLAKUS, Silke, 85560 Ebersberg (DE); HOFHEINZ, Christoph, 83071 Stephanskirchen (DE)
(86) Internationale Anmeldenummer: PCT/EP2011/050509
(87) Internationale Veröffentlichungsnummer: WO 2011/089085

(56) Entgegenhaltungen:
- EP-A2- 0 753 488
- WO-A1-2004/099099
- WO-A1-2009/050104
- WO-A1-2009/153202
- WO-A2-2006/133933
- US-A1- 2003 199 616

## Beschreibung

Gegenstand der vorliegenden Erfindung ist ein Dispergiermittel, ein Verfahren zu seiner Herstellung sowie dessen Verwendung.
Polycarboxylate, insbesondere in Form von Polycarboxylatethern werden - neben Polyacrylaten, Ligninsulfonaten, Melaminsulfonaten und Naphthalinsulfonaten - sehr breit als Dispergiermittel (Fließmittel) für bauchemische Zubereitungen eingesetzt, um den Wasseranspruch bei sonst gleicher Zusammensetzung zu verringern oder um die Verarbeitbarkeit bei sonst gleicher Zusammensetzung zu verbessern.
Bei allen genannten Dispergiermitteln handelt es sich um Polyelektrolyte, die aufgrund ihrer Ladungsträger im Polymer an den Oberflächen der hydratisierenden anorganischen Bindemittel (z.B. Zement, aber auch Gips und Anhydrit) adsorbieren und dadurch die Oberflächenladung der mineralischen Partikel verändern (elektrostatischer Dispergiermechanismus). Kammpolymere (Polycarboxylatether) bestehen aus einer Hauptkette ("Backbone"), entlang der die adsorptionsfähigen funktionellen Gruppen - in der Regel Carboxylate - angeordnet sind, sowie - im Gegensatz zu den anderen genannten Dispergiermitteln - aus Seitenketten, die bspw. aus ungeladenen hydrophilen Ethylenoxid-Einheiten aufgebaut sind. Diese Seitenketten weisen einen großen Raumanspruch auf (sterisch anspruchsvoll) und beeinflussen somit die Dispergierwirkung zusätzlich (sterischer Dispergiermechanismus). Die Polymere adsorbieren über ihre anionischen Gruppen auf die positiv geladenen Bereiche der Bindemittelpartikel, während die Seitenketten in den mit Anmachwasser gefüllten Porenraum ragen und so die Zusammenlagerung der Feststoffteilchen durch sterische Hinderung hemmen, was die dispergierende Wirkung erklärt. Bis zur sogenannten Sättigungsdosierung steigt die dispergierende Wirkung der Dispergiermittel (z. B. messbar durch Fließmaße) mit steigender Zugabemenge bzw. der adsorbierten Polyelektrolytmenge.
Es hat sich dabei auch gezeigt, dass insbesondere Polycarboxylatether zum Teil sehr sensibel auf Veränderungen in den Mörtel- und Betonrezepturen reagieren, was zu entsprechenden feinen Variationen im Molekülaufbau und damit auch zur bekannten Vielzahl an geeigneten Dispergiermitteln geführt hat. Über die Kenntnis der Struktur-Wirkungsbeziehung wurden so vielfältige, maßgeschneiderte Additive mit dispergierender Wirkung möglich.
Unterschiedliche Zusammensetzungen der Dispergiermittel haben unterschiedliche Auswirkungen auf die Rheologie der Baustoffmischungen und die Hydratationskinetik der anorganischen Bindemittel zur Folge. Je höher die Ladungsdichte des Polymers, desto größer die Affinität zur Festkörperoberfläche und desto stärker die unmittelbare Dispergierung.

Neben der chemischen Zusammensetzung des Dispergiermittels nehmen unter anderem auch die Temperatur und die chemische Zusammensetzung der bauchemischen Zubereitung (insbesondere die schnell wasserlöslichen Ionen wie z. B. Alkalisulfate) Einfluss auf die Dispergierung der Partikel und bspw. damit auf die Verarbeitbarkeit eines Frischmörtels.

Bei niedrigen Temperaturen und bei einer hohen Konzentration an Ionen, die kompetitiv zum Dispergiermittel an Festkörperoberflächen adsorbieren können (z. B. Sulfationen), muss die Ladungsdichte des Fließmittels vergleichsweise hoch sein, um nach kurzer Zeit vollständig wirksam zu sein.

Auf der anderen Seite führt eine hohe Ladungsdichte des Fließmittels bei hohen Temperaturen und in bauchemischen Zubereitungen mit einer niedrigen Konzentration an Ionen, die kompetitiv zum Dispergiermittel an der Bindemitteloberfläche adsorbieren können (z. B. Sulfationen) dazu, dass das zugegebene Fließmittel rasch an Wirksamkeit verliert.

Die Dauer des Einflusses auf die Rheologie bei vergleichsweise hoher Ladungsdichte des Dispergiermittels kann verlängert werden, indem die Gesamtdosierung des Dispergiermittels erhöht wird. Unter Umständen (bei Dispergiermittelkonzentrationen deutlich unterhalb der Sättigungsdosierung) wird dann aber auch gleichzeitig das Anfangsfließmaß erhöht. Auf der anderen Seite kann die Nachverflüssigung nicht durch eine Erhöhung der Fließmitteldosierung eliminiert werden.

Es ist bekannt, dass Acrylsäureester in basischem Milieu verseift werden können. Dabei werden Seitenketten teilweise abgespalten, die sterische Komponente der dispergierenden Wirkung geht verloren. Daher ist es Stand der Technik, stattdessen Methacrylsäureesther als Dispergiermittel zu verwenden, da diese deutlich stabiler gegenüber Verseifung sind.

Weiterhin Stand der Technik ist die Verwendung von Polycarboxylatethern als Dispergiermittel, die keine Abspaltung von Seitenketten in basischem Milieu zeigen.

Die WO 2009/050104 offenbart Dispergiermittel, die als dispergierend wirkende Komponente eine Mischung aus einem Polycarboxylatether, einem Polycarboxylatester und einem ungeladenen Alkenylgruppen-haltigen Polyalkylenoxid enthalten.

Weiterhin sind aus der WO 2004/099099 Zementzusätze bekannt, die als dispergierend wirkende Komponente eine Mischung aus zwei unterschiedlichen Polycarbonsäuren aufweisen. Diese können sowohl ungeladene Polycarboxylatester als auch ungeladene Polycaboxylatether sein.

Nachteilig bei den bislang bekannten Dispergiermitteln und Dispergiermittelkombinationen ist, dass das Ausmaß an Dispergierung nur sehr schwer gesteuert werden und auch die Verarbeitbarkeitsdauer der angemachten bauchemischen Massen wie sie bspw. Frischmörtel darstellen, noch verbessert werden kann.

Gelöst wurde diese Aufgabe mit einem Dispergiermittel, enthaltend als dispergierend wirkende Komponente die Kombination von
(a) mindestens einem Vertreter der Polycarboxylatether, mit einem Gewichtsanteil von 0,1 bis 99,9 Gew.-%,
(b) mindestens einem Vertreter der Polycarboxylatester mit einem Gewichtsanteil bis 99,8 Gew.-%,
   und
(c) mindestens einem Vertreter der ungeladenen Copolymere mit einem Gewichtsanteil von 0,1 bis 99,9 Gew.-%,
wobei es sich bei dem ungeladenen Copolymer (c)
- um einen Vertreter der allgemeinen Formel (IV) 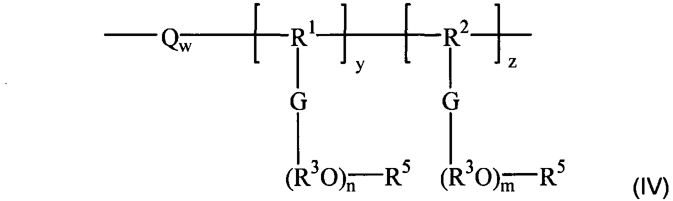 handelt,
   worin Q für ein ethylenisch ungesättigtes Monomer mit mindestens einem hydrolysierbaren Rest steht, G bedeutet O, C (O)-O oder O-(CH₂)ₚ-O mit p = 2 bis 8, wobei Mischungen der Varianten von G in einem Polymer möglich sind; R¹ und R² bedeuten unabhängig voneinander mind. ein C₂-C₈-Alkyl; R³ umfasst (CH₂)_{c}, wobei es sich bei c um eine ganze Zahl zwischen 2 und 5 handelt und wobei Mischungen der Vertreter von R³ im selben Polymermolekül möglich sind; R⁵ bedeutet mind. einen Vertreter ausgewählt aus der Reihe H, einen linearen oder verzweigten, gesättigten oder ungesättigten C₁-C₂₀ aliphatischen Kohlenwasserstoffrest, einen C₅-C₈ cycloaliphatischen Kohlenwasserstoffrest oder einen substituierten oder unsubstituierten C₆-C₁₄ Arylrest; m = 1 bis 30, n = 31 bis 350, w = 1 bis 40, y = 0 bis 1 und z = 0 bis 1, wobei die Summe (y + z) > 0 ist,
   oder
- um einen Vertreter der allgemeinen Formel (V) 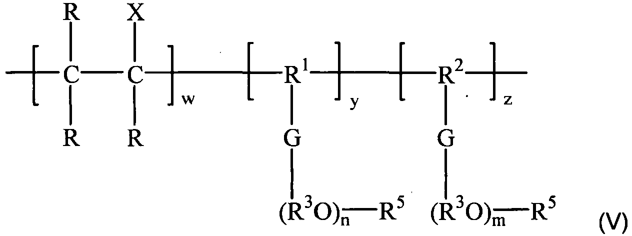 handelt, worin X für einen hydrolysierbaren Rest und R für H oder CH₃ stehen; G, p, R¹, R², R³, R⁵, m, n, w, y, z und (y + z) besitzen die unter der Formel (IV) genannten Bedeutungen,
   oder
- um mind. einen Vertreter der allgemeinen Formel (VI) 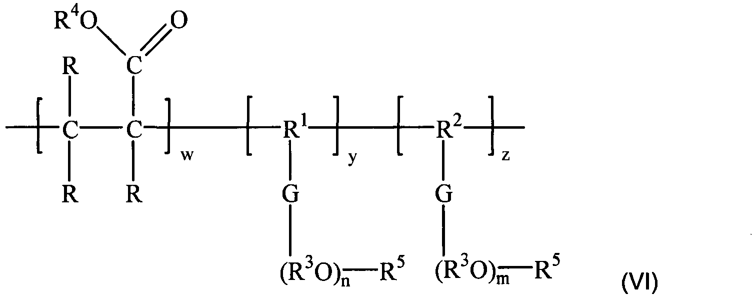 handelt, worin R⁴ mind. einen C₁-C₂₀ Alkyl- oder C₂-C₂₀ Hydroxyalkylrest bedeutet und die Reste G, p, R, R¹, R², R³, c, R⁴, R⁵ sowie m, n, w, y, z und (y + z) die unter den Formeln (IV) und (V) genannten Bedeutungen besitzen.

Die Verwendung der als Komponenten (a), (b) und (c) genannten Vertreter als Dispergiermittel ist insbesondere aus bauchemischen Anwendungen bestens bekannt. Auch sind die einzelnen Vertreter als Stand der Technik bereits ausführlich vorbeschrieben.

Die als Komponente (a) vorgesehenen Polycarboxylatether finden sich als Copolymere bspw. in DE 10 2006 027 035 A1, US 7,070,648 B1 sowie WO 2006/133933 A2. Der Inhalt von WO 2006/133933 A2 ist bezüglich der dort beschriebenen Copolymere substantieller Bestandteil der vorliegenden Offenbarung.

Hinsichtlich der Polycarboxylatester-Varianten (b) und deren Ausgestaltungsmöglichkeiten wird insbesondere auf EP 0 753 488 B1 verwiesen, deren Inhalt bzgl. der dort beschriebenen Dispergiermittel ebenfalls substantieller Bestandteil der vorliegenden Offenbarung ist.

Die dritte Komponente, nämlich Vertreter der Variante (c) finden sich in der internationalen Patentanmeldung, veröffentlicht als WO 2009/153202. Auch deren Inhalt ist bzgl. der dort beschriebenen Dispergiermittel substantieller Bestandteil der vorliegenden Offenbarung.

Überraschend hat sich herausgestellt, dass nun auch Polyacrylsäurederivate, die zwar Seitenketten besitzen können, in pH-neutraler wässriger Lösung aber zunächst keine Ladung besitzen und daher in neutraler Lösung auch nicht an geladenen Oberflächen adsorbieren, in Kombination mit anderen dispergierend wirkenden Komponenten nun auch in Dispergiermitteln einsetzbar sind. In Frage kommen hierfür z. B. Copolymere aus Vinylethern mit Hydroxypropylacrylat (HPA) und/oder Hydroxyethylacrylat (HEA). Werden diese Copolymere basisch behandelt, so spalten sich entsprechende organische Hydroxyverbindungen ab und es entstehen Ladungsträger (Carbonsäuregruppen).

Die vorliegende Erfindung umfasst auch die Verwendung von ungeladenen Komponenten (c), wie z.B. Polyacrylsäurederivate alleine oder in Verbindung mit klassischen Polycarboxylaten und/oder Polycarboxylatethern und/oder anderen Dispergiermitteln (wie Melaminsulfonaten oder Naphthalinsulfonaten) für bauchemische Zubereitungen (z. B. Werktrockenmörtel auf Basis anorganischer Bindemittel wie z. B. Portlandzement, Portlandkompositzement, Tonerdezement). Es ist aber auch die Dispergierung anderer Feststoffe in basischer Lösung denkbar (z. B. alkalisch angeregter Hüttensand bzw. Anhydrit oder Pigmente in alkalischer Lösung).

Durch die sich erfindungsgemäß in-situ bildenden Dispergiermittel kann nun eine steuerbare nachträgliche Dosierung von Dispergiermittel ohne zusätzlichen Prozessschritt erreicht werden, was ebenfalls in diesem Ausmaß nicht vorhersehbar war.

Außderdem besteht ein Vorteil der Erfindung darin, dass auf diese Weise das Ausmaß an Dispergierung in mehreren Stufen gesteuert werden kann (z. B. bei gleichzeitiger Verwendung von HPA und HEA).

Darüber hinaus kann auf diese Weise die Verarbeitbarkeitsdauer eines Frischmörtels insbesondere bei erhöhten Temperaturen durch eine zunehmende Verseifung verlängert werden.

Schließlich wird es durch die erfindungsgemäße Dispergiermittelkombination möglich, anfänglich ein Fließmittel außerhalb der Sättigungsdosierung zu dosieren, und den zwangsläufig durch die geringe Dosierung einsetzenden Verlust an Verarbeitbarkeit durch die einsetzende Verseifung der anfänglich ungeladenen Komponente auszugleichen. Dadurch wird bei geeigneter Fließmittelformulierung eine lang anhaltende gleichmäßige Verarbeitbarkeit auch auf mittlerem Niveau erreicht.

Die Vielzahl der Vorteile der vorliegenden Erfindung war so nicht vorhersehbar.

Bevorzugt liegt das erfindungsgemäße Dispergiermittel in Pulverform vor und insbesondere als wasserlösliches Pulver. Die wasserlösliche Variante sollte die Regel sein.

Unter einem "wasserlöslichen Pulver" wird dabei im Rahmen dieser Erfindung ein Pulver verstanden, von dem sich bei Raumtemperatur im Allgemeinen mindestens 0,01 Gew.-% in Wasser lösen und welches bis zu einer Konzentration von 60 Gew.-% in Wasser, bevorzugt 40 Gew.-% in Wasser, eine klare einphasige Lösung ohne wesentliche Trübung bildet. Sollten bei der wasserlöslichen Variante Trübungen auftreten, sind diese meist wirkstoffbedingt bzw. auf die Polymere zurückzuführen.

Das Dispergiermittel gemäß vorliegender Erfindung ist insbesondere dadurch gekennzeichnet, dass es durch Co-Trocknung der Komponenten (a), ggf. (b) sowie (c) hergestellt wurde, insbesondere unter Verwendung von mindestens einem Vertreter der Antibackmittel, Rieselhilfsmittel, Stabilisierungsmittel. Die Komponenten (a), ggf. (b) sowie (c) wurden hierfür vorzugsweise einem Trocknungsverfahren und bevorzugt einer Sprühtrocknung unterzogen. Hierfür eignen sich insbesondere die Kombinationen der Komponenten (a + c) und/oder (a + b + c) und/oder (a + b) und/oder (b + c). Als besonders bevorzugt gilt die Kombination (a + c), die nachfolgend mit der getrennt getrockneten Komponente b vermischt wurde. Aber auch die Co-Sprühtrocknung der Komponenten (a + b + c) ist als sehr vorteilhaft anzusehen.

Nachfolgend wird zu den einzelnen geeigneten Komponenten (a), (b) und (c) des erfindungsgemäßen Dispergiermittels detailliert Stellung genommen:

### - Komponente (a):

Bei den Polycarboxylatethern (a) sollte es sich vorzugsweise um zwei voneinander verschiedene Vertreter eines Copolymers handeln, jeweils bestehend aus
1) mindestens einem olefinisch ungesättigten Carbonsäurederivat oder einem Ester oder ein Salz davon und/oder einem olefinisch ungesättigten Sulfonsäurederivat oder einem Salz davon,
   und
2) mindestens einem Comonomer, welches durch die Umsetzung des Polyethermakromonomers eine Struktureinheit im Copolymer erzeugt, die durch eine der allgemeinen Formeln (la), (Ib) und/oder (Ic) repräsentiert wird: 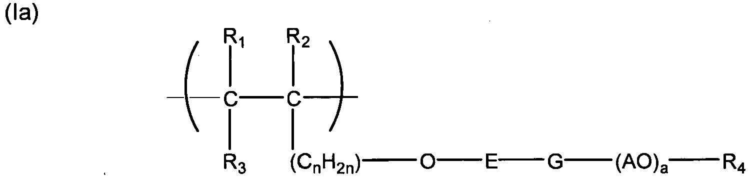 mit
   R¹, R² sowie R³ jeweils gleich oder verschieden und unabhängig voneinander repräsentiert durch H und/oder eine unverzweigte oder verzweigte C₁-C₄ Alkylgruppe;
   E gleich oder verschieden sowie repräsentiert durch eine unverzweigte oder verzweigte C₁-C₆ Alkylengruppe, eine Cyclohexylgruppe, CH₂-C₆H₁₀, ortho, meta oder para substituiert vorliegendes C₆H₄ und/oder eine nicht vorhandene Einheit;
   G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
   A gleich oder verschieden sowie repräsentiert durch CₓH₂ₓ mit x = 2, 3, 4 und/oder 5 (bevorzugt x = 2) und/oder CH₂CH(C₆H₅);
   n gleich oder verschieden sowie repräsentiert durch 0, 1, 2, 3, 4 und/oder 5;
   a gleich oder verschieden sowie repräsentiert durch eine ganze Zahl von 7 bis 350 (bevorzugt 10 - 200);
   R⁴ gleich oder verschieden sowie repräsentiert durch H, eine unverzweigte oder verzweigte C₁-C₂₀ Alkylgruppe, einen cycloaliphatischen Kohlenwasserstoffrest mit 5 bis 8 C-Atomen, einen gegebenenfalls substituierten Arylrest mit 6 bis 14 C-Atomen, CO-NH₂, und/oder COCH₃; 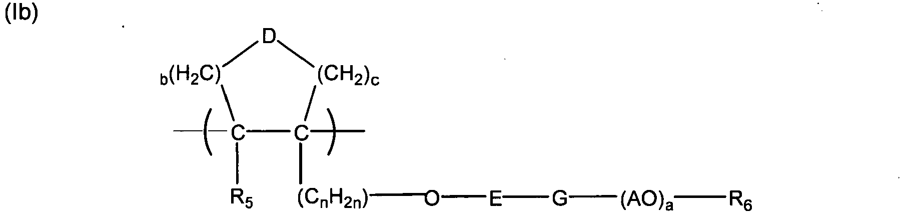
   mit
   R⁵ gleich oder verschieden sowie repräsentiert durch H und/oder eine unverzweigte oder verzweigte C₁-C₄ Alkylgruppe;
   E gleich oder verschieden sowie repräsentiert durch eine unverzweigte oder verzweigte C₁-C₆ Alkylengruppe, eine Cyclohexylgruppe, CH₂-C₆H₁₀, ortho, meta oder para substituiert vorliegendes C₆H₄ und/oder durch eine nichtvorhandene Einheit;
   G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
   A gleich oder verschieden sowie repräsentiert durch CₓH₂ₓ mit x = 2, 3, 4 und/oder 5 und/oder CH₂CH(C₆H₅);
   n gleich oder verschieden sowie repräsentiert durch 0, 1, 2, 3, 4 und/oder 5
   a gleich oder verschieden sowie repräsentiert durch eine ganze Zahl von 7 bis 350;
   D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 oder 3, wobei b + c = 2 oder 3;
   R⁶ gleich oder verschieden sowie repräsentiert durch H, eine unverzweigte oder verzweigte C₁-C₂₀ Alkylgruppe, einen cycloaliphatischen Kohlenwasserstoffrest mit 5 bis 8 C-Atomen, einen gegebenenfalls substituierten Arylrest mit 6 bis 14 C-Atomen, CO-NH₂, und/oder COCH₃; 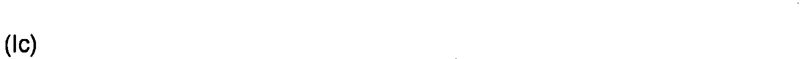 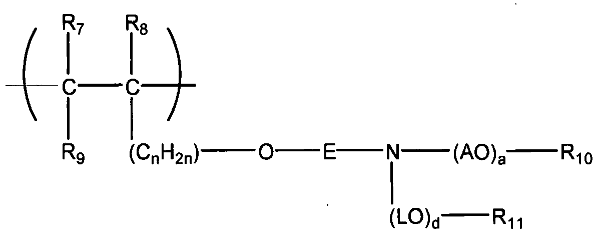
   mit
   R⁷, R⁸ sowie R⁹ jeweils gleich oder verschieden und unabhängig voneinander repräsentiert durch H und/oder eine unverzweigte oder verzweigte C₁-C₄ Alkylgruppe;
   E gleich oder verschieden sowie repräsentiert durch eine unverzweigte oder verzweigte C₁-C₆ Alkylengruppe, eine Cyclohexylgruppe, CH₂-C₆H₁₀, ortho, meta oder para substituiert vorliegendes C₆H₄ und/oder durch eine nicht vorhandene Einheit;
   A gleich oder verschieden sowie repräsentiert durch CₓH₂ₓ mit x = 2, 3, 4 und/oder 5 und/oder CH₂CH(C₆H₅);
   n gleich oder verschieden sowie repräsentiert durch 0, 1, 2, 3, 4 und/oder 5;
   L gleich oder verschieden sowie repräsentiert durch CₓH₂ₓ mit x = 2, 3, 4 und/oder 5 und/oder CH₂-CH(C₆H₅);
   a gleich oder verschieden sowie repräsentiert durch eine ganze Zahl von 7 bis 350;
   d gleich oder verschieden sowie repräsentiert durch eine ganze Zahl von 2 bis 350;
   R¹⁰ gleich oder verschieden sowie repräsentiert durch H und/oder eine unverzweigte oder verzweigte C₁-C₄ Alkylgruppe,
   R¹¹ gleich oder verschieden sowie repräsentiert durch H und/oder eine unverzweigte C₁-C₄ Alkylgruppe.

In diesem Zusammenhang sei darauf hingewiesen, dass 1.) im Copolymer des Polycarboxylatethers (a) die Einheiten, welche die Komponenten 1) oder 2) darstellen, jeweils keine innermolekularen Unterschiede aufweisen, und/oder 2.) das Copolymer a) eine polymere Mischung von Komponenten 1) und 2) darstellt, wobei in diesem Fall die Einheiten innermolekulare Unterschiede hinsichtlich der Reste R₁ und/oder R₂ und/oder R₃ und/oder R₄ und/oder R₅ und/oder R₆ und/oder R₇ und/oder R₈ und/oder R₉ und/oder R₁₀ und/oder R₁₁ und/oder n und/oder a und/oder b und/oder c und/oder d aufweisen und wobei sich die angesprochenen Unterschiede insbesondere auf die Zusammensetzung und Länge der Seitenketten beziehen.

Bezüglich des Polycarboxylatethers (a) und seiner Darstellungsform ist die Offenbarung von WO 2006/133933 A2 integraler Bestandteil der vorliegenden Erfindung.

Die vorliegende Erfindung berücksichtigt vorzugsweise ein Dispergiermittel, in dem das Copolymer (a) die Comonomer-Komponente 1) in Anteilen von 50 bis 99 Mol-% und die Comonomer-Komponente 2) in Anteilen von 50 bis 1 Mol-% enthält.

Vertreter vom Typ (a), welche die Comonomer-Komponente 1) in Anteilen von 60 bis 90 Mol-% und die Comonomer-Komponente 2) in Anteilen von 40 bis 10 Mol-% enthalten, sind als ebenfalls bevorzugt anzusehen.

Betreffend die Komponente (a) sollte vorzugsweise die Comonomer-Komponente 1) für eine Acrylsäure oder ein Salz davon stehen, und die Comonomer-Komponente 2) als Polyethermakromonomer ein alkoxyliertes Isoprenol und/oder einen alkoxylierten Hydroxybutylvinylether und/oder einen alkoxylierten Vinylether und/oder einen alkoxylierten (Meth)allylalkohol und/oder ein vinyliertes Methylpolyalkylenglykol mit bevorzugt jeweils einer arithmetisch mittleren Zahl an Oxyalkylengruppen von 9 bis 350 enthalten. Die Comonomer-Komponente 1) sollte aus der Reihe Acrylsäure, Methacrylsäure, Crotonsäure, Isocrotonsäure, Allylsulfonsäure, Vinylsulfonsäure und deren geeignete Salze sowie deren Alkyl- oder Hydroxyalkylester, und/oder der Dicarbonsäuren, Phosphonsäuren und ethylenisch ungesättigter Phosphorsäureester stammen.

Weiterhin sieht die vorliegende Erfindung vor, dass die Vertreter der Komponente (a) zusätzliche Baugruppen in copolymerisierter Form aufweisen. In diesem Fall kann es sich bei den zusätzlichen Baugruppen um Styrole, Acrlyamide und/oder um hydrophobe Verbindungen handeln, wobei Esterstruktureinheiten, Polypropylenoxid und Polypropylenoxid/Polyethylenoxid-Einheiten besonders bevorzugt sind. Zwar ist die beanspruchte Formulierung nicht auf definierte Anteile der genannten zusätzlichen Baugruppen im Copolymer (a) beschränkt; dennoch ist es erfindungsgemäß vorteilhaft, wenn das Copolymer (a) die zusätzliche Baugruppe in Anteilen bis 5 Mol-%, bevorzugt von 0,05 bis 3,0 Mol-% und insbesondere von 0,1 bis 1,0 Mol-% enthält.

Hinsichtlich der geeigneten Vertreter gemäß Formel (I) ist festzustellen, dass besondere Vorteile mit einer Alternative verbunden sind, bei der diese für einen Allyl- oder Vinylgruppen-haltigen Polyether oder für eine Isoprenyl- oder Methallyl-Verbindung stehen.

### - Komponente (b):

Bei geeigneten Vertretern der Polycarboxylatester (b) sollte es sich vorzugsweise um ein Polymer handeln, herstellbar durch Polymerisation eines Monomergemisches (I), enthaltend als Hauptkomponente einen Vertreter des Monomertyps Carbonsäure. Bevorzugt ist einMonomer b₁) in einer Menge von 5 bis 98 Gew.-%, ein Monomer b₂) in einer Menge von 2 bis 95 Gew.-% und ein Monomer b₃) in einer Menge bis 50 Gew.-% in der Monomermischung (I) enthalten, wobei sich die jeweiligen Mengen der Monomere b₁), b₂) und b₃) zu 100 Gew.-% addieren.

Bevorzugte Vertreter im Rahmen der vorliegenden Erfindung des Monomers (a) können sein: Hydroxy-ethyl(meth)acrylat, Hydroxy-propyl(meth)acrylat, Polyethylen-glykol-mono(meth)acrylat, Polypropylen-glykol-mono(meth)acrylat, Polybutylen-glykol-mono(meth)acrylat, Polyethylen-glykol-polypropylen-glykol-mono(meth)acrylat, Po-lyethylen-glykol-polybutylen-glykol-mono(meth)acrylat, Polypropylen-glykol-polybutylen-glykol-mono(meth)acrylat, Polyethylen-glykol-polypropylen-glykol-polybutylen-glykol-mono(meth)acrylat, Methoxy-polyethylen-glykol-mono(meth)acrylat, Methoxy-polypropylen-glykol-mono(meth)acrylat, Methoxy-polybutylen-glykol-mono(meth)acrylat, Methoxy-polyethylen-glykol-polypropylen-glykol-mono(meth)acrylat, Methoxy-polyethylen-glykol-polybutylen-glykol-mono(meth)acrylat, Methoxy-polypropylen-glykol-polybutylen-glykol-mono(meth)acrylat, Methoxy-polyethylen-glykol-polypropylen-glykol-polybutylen-glykol-mono(meth)acrylat, Ethoxy-polyethylen-glykol-mono(meth)acrylat, Ethoxy-polypropylen-glykol-mono(meth)acrylat, Ethoxy-polybutylen-glykol-mono(meth)acrylat, Ethoxy-polyethylen-glykol-polypropylenglykol-mono(meth)acrylat, Ethoxy-polyethylen-glykol-polybutylen-glykol-mono(meth)acrylat, Ethoxy-polypropylen-glykol-polybutylen-glykol-mono(meth)acrylat, Ethoxy-polyethylen-glykol-polypropylen-glykol-polybutylen-glykol-mono(meth)acrylat oder beliebige Mischungen daraus.

Bei Monomer (b) kann es sich um einen Vertreter der Reihe Acrylsäure, Methacrylsäure, (Meth)allylsulfonsäure, HEMA-Phosphat, einwertige Metallsalze, zweiwertige Metallsalze, Ammoniumsalze und organische Aminsalze davon und Mischungen daraus, handeln.

Als Vertreter des Monomers (c) kommt mind. ein Vertreter der Ester eines aliphatischen Alkohols mit 1 bis 20 Kohlenstoffatomen mit einer ungesättigten Carbonsäure und insbesondere um Hydroxyethyl-methacrylat (HEMA) oder Hydroxypropylmethacrylat (HPMA) in Frage. Bei der ungesättigten Carbonsäure sollte es sich vorzugsweise um Maleinsäure, Fumarsäure, Citraconsäure, (Meth)Allylsulfonsäure, Itaconsäure, (Meth)acrylsäure oder einwertige Metallsalze, zweiwertige Metallsalze, Ammoniumsalze oder organische Aminsalze davon handeln. Monomere (c) können aber auch Monoester oder Diester von ungesättigten Carbonsäuren, wie Maleinsäure, Fumarsäure oder Citraconsäure sein, mit aliphatischen C₁-bis C₂₀-Alkoholen, C₂-bis C₄-Glykolen oder auch mit (Alkoxy)Polyalkylenglykol.

Hinsichtlich der Komponente (b) sieht die vorliegende Erfindung ebenfalls vor, dass es sich dabei um ein Copolymer, aufbauend auf mindestens einem der vorliegenden Monomere, handelt:
A) ein ethylenisch ungesättigtes Monomer, umfassend einen hydrolysierbaren Rest, wobei dieses hydrolysierbare Monomer eine aktive Bindungsstelle aufweist;
B) ein ethylenisch ungesättigtes Monomer mit mind. einer C₂-C₄ Oxyalkylenseitengruppe mit einer Kettenlänge von 31 bis 350 Einheiten.

Die Komponenten A) und B) können in der Komponete (b) als Copolymer erfindungsgemäß auch gleichzeitig vertreten sein.

Das ethylenisch ungesättigte Monomer der Komponente A) kann erfindungsgemäß mindestens ein Anhydrid oder Imin und/oder mindestens ein Maleinsäureanhydrid oder Maleinimid umfassen. Das ethylenisch ungesättigte Monomer der Komponente A) kann aber auch einen Methacrylsäureester oder einen Acrylsäureester jeweils mit einer Esterfunktionalität umfassen, welcher den hydrolysierbaren Rest enthält. In diesem Falle empfiehlt es sich, wenn es sich bei der Esterfunktionalität mindestens um einen Hydroxypropyl- oder Hydroxyethyl-Rest handelt. Weiterhin ist es als bevorzugt anzusehen, wenn das Copolymer (b) in der Komponente A) mehr als ein ethylenisch ungesättigtes Monomer mit einem hydrolysierbaren Rest aufweist. In diesem Fall kann das ethylenisch ungesättigte Monomer der Komponente A) als Rest mindestens mehr als einen Vertreter der ethylenisch ungesättigten Monomere, mindestens einen Vertreter eines hydrolysierbaren Restes oder eine Mischung aus beiden aufweisen. Auch kann es vorteilhaft sein, wenn der hydrolysierbare Rest in den zuletzt genannten Fällen mindestens eine C₁-C₂₀-Alkoholfunktionalität aufweist. Der hydrolysierbare Rest kann einen C₁-C₂₀-Alkylester, einen C₁-C₂₀-Aminoalkylester, ein Amid oder Mischungen daraus darstellen.

Auch bezüglich der Komponente B) ist erfindungsgemäß vorgesehen, dass diese mindestens ein ethylenisch ungesättigtes Monomer in Form einer C₂-C₈-Alkylethergruppe aufweisen kann. Vorzugsweise sollte das ethylenisch ungesättigte Monomer einen Phenyl-, Allyl- oder (Methyl) Allylether- oder Isoprenyl-Rest aufweisen, oder von einem ungesättigtenC₂-C₈-Alkohol abgeleitet sein, bei dem es sich vorzugsweise um mindestens einen Vertreter der Reihe Phenylalkohol, (Meth)Allylalkohol, Isoprenol oder Methylbutenol handelt.

Von der vorliegenden Erfindung ist ferner bevorzugt umfasst, dass die ethylenisch ungesättigten Monomerseitengruppen der Komponente B) mindestens eine C₄-Oxyalkyleneinheit aufweisen und/oder dass mindestens ein ethylenisch ungesättigtes Monomer der Komponente B) einen C₂-C₈-Carbonsäureester, der insbesondere hydrolysierbar ist, aufweist.

Ferner ist vorgesehen, dass die Oxyalkylenseitengruppen in der Komponente B) mindestens ein Ethylenoxid, ein Propylenoxid, ein Polyethylenoxid, ein Polypropylenoxid oder Mischungen daraus, aufweisen.

Auch kann das Copolymer (b) in der Komponente B) mindestens einen nichtionischen und/oder einen nicht hydrolysierbaren Monomerrest oder Mischungen daraus aufweisen.

### - Komponente (c):

Auch bezüglich des ungeladenen Copolymers (c) sieht die vorliegende Erfindung mehrere bevorzugte Alternativen vor.

Vorzugsweise bedeuten p = 4 und R⁴ = C₂ H₄OH oder C₃ H₆OH; jeder der Reste R⁵ steht für H, m = 5-30, n = 31-250, w = 1,5-30, y = 0 bis 1, z = 0 bis 1 und (y + z) > 0. Das molare Verhältnis von w zu der Summe (y + z) beträgt 1 : 1 bis 20 : 1 und ist vorzugsweise 2 : 1 bis 12 : 1.

Es ist als bevorzugt anzusehen, dass es sich bei dem Copolymer (c) um ein nichtionisches Polyether-Polyester-Copolymer handelt.

Vorgesehen ist auch, dass das beanspruchte Dispergiermittel neben dessen dispergierend wirkenden Komponenten (a), (b) und (c) mindestens ein Additiv, ausgewählt aus der Reihe Entschäumer, Tensid, Antibackmittel, Rieselhilfsmittel, Flammenschutzmittel, Schwindreduzierer, Verzögerer, Beschleuniger, Wasserretentionsmittel, Verdicker enthält. Es kommen als Additive aber auch noch andere Stoffe in Frage, vorzugsweise als Hilfsstoffe und ausgewählt aus der Reihe Streckmittel, Emulgator, Bindemittel, Farbstoff, Biozid, Stabilisierer, Antiabsetzmittel, Markierungsmittel, Trennmittel usw.

Die Gesamtheit der Additive sollte am Dispergiermittel Anteile bis maximal 10,0 Gew.-% und vorzugsweise von 0,05 bis 5,0 Gew.-% betragen.

Generell ist es als vorteilhaft anzusehen, wenn der Entschäumer in freier Form vorliegt; er kann aber auch an mindestens eine der Komponenten (a), (b) und (c) adsorptiv oder chemisch gebunden sein, wobei Mischungen dieser beiden Formen selbstverständlich auch im Dispergiermittel enthalten sein können.

Besonders gut geeignete Vertreter der Tenside sind bspw. Verbindungen ausgewählt aus der Reihe Ethylenoxid/Propylenoxid (EO/PO) Blockcopolymer, Styrol/Maleinsäurecopolymer, Fettsäurealkoholalkoxylat, Alkoholethoxylat R₁₀-(EO)-H mit R₁₀ = eine aliphatische Kohlenwasserstoffgruppe mit 1 bis 25 Kohlenstoffatomen, acetylenisches Diol, Monoalkylpolyalkylen, ethoxyliertes Nonylphenol, Alkylsulfat, Alkylethersulfat, Alkylethersulfonat oder Alkylethercarboxylat. Die Komponente d) kann aber auch einen Alkohol mit einer Polyalkylengruppe umfassen, wobei die Polyalkylengruppe eine Kohlenstoffkettenlänge von 2 bis 20 Kohlenstoffatomen und vorzugsweise von 3 bis 12 Kohlenstoffatomen aufweist.

Neben dem Dispergiermittel, dessen Komponenten (a), (b) und (c), der Gesamtzusammensetzung und den jeweiligen Anteilen an Komponenten beansprucht die vorliegende Erfindung auch ein Verfahren zur Herstellung des erfindungsgemäßen Dispergiermittels in Pulverform.

Dabei werden die Komponenten (a), ggf. (b) sowie (c) co-getrocknet und insbesondere einer Co-Sprühtrocknung unterworfen, insbesondere unter Verwendung von mindestens einem Vertreter der Antibackmittel, Rieselhilfsmittel und Stabilisierungsmittel. Es hat sich hierbei als vorteilhaft erwiesen, wenn ein ungeladenes Copolymer als Komponente (c) verwendet wird, welches mindestens einen Monomerbaustein enthält, dessen Seitenketten ein durchschnittliches Molekulargewicht M_{w} ≥1000, bevorzugt ≥2000 und ganz besonders bevorzugt ≥3000 aufweisen.

Für das erfindungsgemäße Verfahren empfiehlt sich die Verwendung von Säurebausteinen, deren Gesamtanteil aller Ladungen in den Komponenten (a), ggf. (b) sowie (c) ≥ 5, bevorzugt ≥ 7 ganz bevorzugt ≥ 10 Masse-% beträgt.

Schließlich umfasst die vorliegende Erfindung noch die Verwendung eines der erfindungsgemäßen Dispergiermittel zur Kontrolle der Fließfähigkeit wässriger bauchemischer Suspensionen, vorzugsweise auf Basis anorganischer Bindemittel und insbesondere hydraulischer und/oder latent hydraulischer Bindemittel.

Bei dem Bindemittel sollte es sich vorzugsweise um mindestens einen Vertreter ausgewählt aus der Reihe Zemente, insbesondere der Portlandzementklassen CEM I, CEM II, CEM III, CEM IV, CEM V und der Calciumaluminatzemente, der Calciumsulfat-basierten Verbindungen, vorzugsweise Calciumsulfat-Halbhydrat, Anhydrit oder Gips handeln.

Die erfindungsgemäßen Dispergiermittel eignen sich insbesondere für Trockenmörtelzusammensetzungen und hier insbesondere für Fliesenkleber, Reparaturmörtel, Fugenmörtel, Klebemörtel, Armierungsmörtel oder Putze aber auch alternativ in fließfähigen und anorganische Bindemittel-haltigen Massen, insbesondere in selbstverlaufenden Spachtelmassen oder Fließestrichen.

Die nachfolgenden Beispiele veranschaulichen die Vorteile der Erfindung.

### Beispiele:

### 1. Herstellungsbeispiele:

### Beispiel 1.1

In einem Becherglas wurden 200 g einer 35Gew.-%igen wässrigen Lösung eines Dispergiermittels bei Raumtemperatur vorgelegt, welches als dispergierend wirkende Komponente 100 Gew.-% des Polycarboxylatethers Melflux PCE 2650 (Komponente a1) enthielt.
Die Lösung, die einen pH-Wert von 7 aufwies, wurde anschließend unter Rühren mit 1 g eines Stabilisatorintermediates bestehend aus jeweils 50 Gew.-% eines styrolysierten Diphenylamins und 50 Gew.-% eines Methylpolyethylenglycols des mittleren Molgewichts 500 g/mol versetzt.
Die dadurch erhaltene Emulsion wurde anschließend in einem Laborsprühtrockner der Firma NIRO-Atomizer in ein Pulver überführt (Eingangstemperatur 230°C, Austrittstemperatur 100°C). Das erhaltene Pulver wurde anschließend mit 2 g Kieselsäure behandelt, um es in eine rieselfähige Form zu überführen.
Nach Absiebung agglomerierter Partikel durch ein 500 µm Sieb wurde ein weißes Pulver mit einem mittleren Teilchendurchmesser von 150 µm (Luftstrahlsiebanalyse) erhalten.
Abschließend wurde das Pulver zur Verringerung der Verklumpungsneigung mit 10 g eines Antibackmittels behandelt.

### Beispiel 1.2

In einem Becherglas wurden 200 g einer 35Gew.-%igen wässrigen Lösung eines Dispergiermittels bei Raumtemperatur vorgelegt, welches als dispergierend wirkende Komponente 100 Gew.-% des Polycarboxylatethers VP 2661- 599 (Komponente a2) enthielt.
Die Lösung, die einen pH-Wert von 7 aufwies, wurde anschließend unter Rühren mit 1 g eines Stabilisatorintermediates bestehend aus jeweils 50 Gew.-% eines styrolysierten Diphenylamins und 50 Gew.-% eines Methylpolyethylenglycols des mittleren Molgewichts 500 g/mol versetzt.
Die dadurch erhaltene Emulsion wurde anschließend in einem Laborsprühtrockner der Firma NIRO-Atomizer in ein Pulver überführt (Eingangstemperatur 230°C, Austrittstemperatur 100°C). Das erhaltene Pulver wurde anschließend mit 2 g Kieselsäure behandelt, um es in eine rieselfähige Form zu überführen.
Nach Absiebung agglomerierter Partikel durch ein 500 µm Sieb wurde ein weißes Pulver mit einem mittleren Teilchendurchmesser von 150 µm (Luftstrahlsiebanalyse) erhalten.

Abschließend wurde das Pulver zur Verringerung der Verklumpungsneigung mit 10 g eines Antibackmittels behandelt.

### Beispiel 1.3

In einem Becherglas wurden 200 g einer 35Gew.-%igen wässrigen Lösung eines Dispergiermittels bei Raumtemperatur vorgelegt, welches als dispergierend wirkende Komponente 100 Gew.-% des Polycarboxylatesters Melflux AP 100 L enthielt.
Die Lösung, die einen pH-Wert von 7 aufwies, wurde anschließend unter Rühren mit 1 g eines Stabilisatorintermediates bestehend aus jeweils 50 Gew.-% eines styrolysierten Diphenylamins und 50 Gew.-% eines Methylpolyethylenglycols des mittleren Molgewichts 500 g/mol versetzt.
Die dadurch erhaltene Emulsion wurde anschließend in einem Laborsprühtrockner der Firma NIRO-Atomizer in ein Pulver überführt (Eingangstemperatur 230°C, Austrittstemperatur 100°C). Das erhaltene Pulver wurde anschließend mit 2 g Kieselsäure behandelt, um es in eine rieselfähige Form zu überführen.
Nach Absiebung agglomerierter Partikel durch ein 500 µm Sieb wurde ein weißes Pulver mit einem mittleren Teilchendurchmesser von 150 µm (Luftstrahlsiebanalyse) erhalten.
Abschließend wurde das Pulver zur Verringerung der Verklumpungsneigung mit 10 g eines Antibackmittels behandelt.

### Beispiel 1.4

In einem Becherglas wurden 200 g einer 35Gew.-%igen wässrigen Lösung eines Dispergiermittels bei Raumtemperatur vorgelegt, welches als dispergierend wirkende Komponente die Kombination von 50 Gew.-% des Polycarboxylatethers Melflux PCE 832 als Vertreter der Komponente (a) und 50 Gew.-% eines ungeladenen Copolymerisates, bestehend aus 10 mol% eines Makromonomers (hergestellt durch Ethoxylierung von Hydroxybutylvinylether mit 66 mol EO) und 90 mol% 2- Hydroxyethylacrylat, als Vertreter der Komponente (c) enthielt.
Die Lösung, die einen pH-Wert von 7 aufwies, wurde anschließend unter Rühren mit 1 g eines Stabilisatorintermediates bestehend aus jeweils 50 Gew.-% eines styrolysierten Diphenylamins und 50 Gew.-% eines Methylpolyethylenglycols des mittleren Molgewichts 500 g/mol versetzt.
Die dadurch erhaltene Emulsion wurde anschließend in einem Laborsprühtrockner der Firma NIRO-Atomizer in ein Pulver überführt (Eingangstemperatur 230°C, Austrittstemperatur 100°C). Das erhaltene Pulver wurde mit 2 g Kieselsäure behandelt, um es in eine rieselfähige Form zu überführen.
Nach Absiebung agglomerierter Partikel durch ein 500 µm Sieb wurde ein weißes Pulver mit einem mittleren Teilchendurchmesser von 160 µm (Luftstrahlsiebanalyse) erhalten.

Abschließend wurde das Pulver zur Verringerung der Verklumpungsneigung mit 10 g eines Antibackmittels behandelt.

### Beispiel 1.5

In einem Becherglas wurden 200 g einer 35Gew.-%igen wässrigen Lösung eines Dispergiermittels bei Raumtemperatur vorgelegt, welches als dispergierend wirkende Komponente die Kombination von 50 Gew.-% des Polycarboxylatesters Melflux AP 100 L 35% (Komponente (b)) sowie 15 Gew.-% eines ungeladenen Copolymerisates, bestehend aus 10 mol% eines Macromonomers (hergestellt durch Ethoxylierung von Hydroxybutylvinylether mit 66 mol EO) und 90 mol% 2-Hydroxyethylacrylat, als Vertreter der Komponente (c) enthielt.
Die Lösung, die einen pH-Wert von 7 aufwies, wurde anschließend unter Rühren mit 1 g eines Stabilisatorintermediates bestehend aus jeweils 50 Gew.-% eines styrolysierten Diphenylamins und 50 Gew.-% eines Methylpolyethylenglycols des mittleren Molgewichts 500 g/mol versetzt.
Die dadurch erhaltene Emulsion wurde anschließend in einem Laborsprühtrockner der Firma NIRO-Atomizer in ein Pulver überführt (Eingangstemperatur 230°C, Austrittstemperatur 100°C). Das erhaltene Pulver wurde mit 2 g Kieselsäure behandelt, um es in eine rieselfähige Form zu überführen.
Nach Absiebung agglomerierter Partikel durch ein 500 µm Sieb wurde ein weißes Pulver mit einem mittleren Teilchendurchmesser von 150 µm (Luftstrahlsiebanalyse) erhalten.
Abschließend wurde das Pulver zur Verringerung der Verklumpungsneigung mit 10 g eines Antibackmittels behandelt.

### Beispiel 1.6

In einem Becherglas wurden 200 g einer 35Gew.-%igen wässrigen Lösung eines Dispergiermittels bei Raumtemperatur vorgelegt, welches als dispergierend wirkende Komponentedie Kombination von 15 Gew.-% des Polycarboxylatethers Melflux PCE 2670 (Komponente a1), 28 Gew.-% des Polycarboxylatethers VP 2661- 599 (Komponente a2), 42 Gew.-% des Polycarboxylatesters Melflux AP 100 L 35% (Komponente (b)) sowie 15 Gew.-% eines ungeladenen Copolymerisates, bestehend aus 10 mol% eines Macromonomers (hergestellt durch Ethoxylierung von Hydroxybutylvinylether mit 66 mol EO) und 90 mol% 2-Hydroxyethylacrylat, als Vertreter der Komponente (c) enthielt.
Die Lösung, die einen pH-Wert von 7 aufwies, wurde anschließend unter Rühren mit 1 g eines Stabilisatorintermediates bestehend aus jeweils 50 Gew.-% eines styrolysierten Diphenylamins und 50 Gew.-% eines Methylpolyethylenglycols des mittleren Molgewichts 500 g/mol versetzt.

Die dadurch erhaltene Emulsion wurde anschließend in einem Laborsprühtrockner der Firma NIRO-Atomizer in ein Pulver überführt (Eingangstemperatur 230°C, Austrittstemperatur 100°C). Das erhaltene Pulver wurde mit 2 g Kieselsäure behandelt, um es in eine rieselfähige Form zu überführen.
Nach Absiebung agglomerierter Partikel durch ein 500 µm Sieb wurde ein weißes Pulver mit einem mittleren Teilchendurchmesser von 150 µm (Luftstrahlsiebanalyse) erhalten.
Abschließend wurde das Pulver zur Verringerung der Verklumpungsneigung mit 10 g eines Antibackmittels behandelt.

### Beispiel 1.7

In einem Becherglas wurden 200 g einer 35Gew.-%igen wässrigen Lösung eines Dispergiermittels bei Raumtemperatur vorgelegt, welches als dispergierend wirkende Komponentedie Kombination von 42 Gew.-% des Polycarboxylat-ethers VP 2661- 599 (Komponente a2), 42 Gew.-% des Polycarboxylatesters Melflux AP 100 L (Komponente (b)) sowie 16 Gew.-% eines ungeladenen Copolymerisates, bestehend aus 10 mol% eines Macromonomers (hergestellt durch Ethoxylierung von Hydroxybutylvinylether mit 66 mol EO) und 90 mol% 2-Hydroxybutylacrylat, als Vertreter der Komponente (c) enthielt.
Die Lösung, die einen pH-Wert von 7 aufwies, wurde anschließend unter Rühren mit 1 g eines Stabilisatorintermediates bestehend aus jeweils 50 Gew.-% eines styrolysierten Diphenylamins und 50 Gew.-% eines Methylpolyethylenglycols des mittleren Molgewichts 500 g/mol versetzt.
Die dadurch erhaltene Emulsion wurde anschließend in einem Laborsprühtrockner der Firma NIRO-Atomizer in ein Pulver überführt (Eingangstemperatur 230°C, Austrittstemperatur 100°C). Das erhaltene Pulver wurde mit 2 g Kieselsäure behandelt, um es in eine rieselfähige Form zu überführen.
Nach Absiebung agglomerierter Partikel durch ein 500 µm Sieb wurde ein weißes Pulver mit einem mittleren Teilchendurchmesser von 150 µm (Luftstrahlsiebanalyse) erhalten.
Abschließend wurde das Pulver zur Verringerung der Verklumpungsneigung mit 10 g eines Antibackmittels behandelt.

### Beispiel 1.8

In einem Becherglas wurden 200 g einer 35Gew.-%igen wässrigen Lösung eines Dispergiermittels bei Raumtemperatur vorgelegt, welches als dispergierend wirkende Komponente die Kombination von 85 Gew.-% des Polycarboxylatethers VP 2661- 599 (Komponente a2) und 15 Gew.-% eines ungeladenen Copolymerisates, bestehend aus 15 mol% eines ungeladenen Macromonomers (hergestellt durch Ethoxylierung von Hydroxybutylvinylether mit 66 mol EO) und 85 mol% 2-Hydroxyethylacrylat als Vertreter der Komponente (c) enthielt.
Die Lösung, die einen pH-Wert von 7 aufwies, wurde anschließend unter Rühren mit 1 g eines Stabilisatorintermediates bestehend aus jeweils 50 Gew.-% eines styrolysierten Diphenylamins und 50 Gew.-% eines Methylpolyethylenglycols des mittleren Molgewichts 500 g/mol versetzt.
Die dadurch erhaltene Emulsion wurde anschließend in einem Laborsprühtrockner der Firma NIRO-Atomizer in ein Pulver überführt (Eingangstemperatur 230°C, Austrittstemperatur 100°C). Das erhaltene Pulver wurde mit 2 g Kieselsäure behandelt, um es in eine rieselfähige Form zu überführen.
Nach Absiebung agglomerierter Partikel durch ein 500 µm Sieb wurde ein weißes Pulver mit einem mittleren Teilchendurchmesser von 150 µm (Luftstrahlsiebanalyse) erhalten.
Abschließend wurde das Pulver zur Verringerung der Verklumpungsneigung mit 10 g eines Antibackmittels behandelt.

### Beispiel 1.9

In einem Becherglas wurden 200 g einer 35Gew.-%igen wässrigen Lösung eines Dispergiermittels bei Raumtemperatur vorgelegt, welches als dispergierend wirkende Komponente die Kombination von 75 Gew.-% des Polycarboxylatethers Melflux PCE 598 als Vertreter der Komponente (a) und 25 Gew.-% eines ungeladenen Copolymerisates, bestehend aus 5 mol% eines Makromonomers (hergestellt durch Ethoxylierung von Hydroxybutylvinylether mit 66 mol EO) und 95 mol% 2- Hydroxyethylacrylat als Vertreter der Komponente (c) enthielt.
Die Lösung, die einen pH-Wert von 7 aufwies, wurde anschließend unter Rühren mit 1 g eines Stabilisatorintermediates bestehend aus jeweils 50 Gew.-% eines styrolysierten Diphenylamins und 50 Gew.-% eines Methylpolyethylenglycols des mittleren Molgewichts 500 g/mol versetzt.
Die dadurch erhaltene Emulsion wurde anschließend in einem Laborsprühtrockner der Firma NIRO-Atomizer in ein Pulver überführt (Eingangstemperatur 230°C, Austrittstemperatur 100°C). Das erhaltene Pulver wurde mit 2 g Kieselsäure behandelt, um es in eine rieselfähige Form zu überführen.
Nach Absiebung agglomerierter Partikel durch ein 500 µm Sieb wurde ein weißes Pulver mit einem mittleren Teilchendurchmesser von 130 µm (Luftstrahlsiebanalyse) erhalten.
Abschließend wurde das Pulver zur Verringerung der Verklumpungsneigung mit 10 g eines Antibackmittels behandelt.

### Beispiel 1.10

In einem Becherglas wurden 200 g einer 35Gew.-%igen wässrigen Lösung eines Dispergiermittels bei Raumtemperatur vorgelegt, welches als dispergierend wirkende Komponente die Kombination von 5 Gew.-% des Polycarboxylatethers Melflux PCE 2670 als Vertreter der Komponente (a), 45 Gew.-% des Trocknungshilfsmittel Melflux AP 4547/232 als Vertreter der Komponente (d) und 50 Gew.-% eines ungeladenen Copolymerisates, bestehend aus 10 mol% eines Makromonomers (hergestellt durch Ethoxylierung von Hydroxybutylvinylether, mit 130 mol EO) und 90 mol% 2- Hydroxyethylacrylat, als Vertreter der Komponente (c) enthielt.
Die Lösung, die einen pH-Wert von 7 aufwies, wurde anschließend unter Rühren mit 1 g eines Stabilisatorintermediates bestehend aus jeweils 50 Gew.-% eines styrolysierten Diphenylamins und 50 Gew.-% eines Methylpolyethylenglycols des mittleren Molgewichts 500 g/mol versetzt.
Die dadurch erhaltene Emulsion wurde anschließend in einem Laborsprühtrockner der Firma NIRO-Atomizer in ein Pulver überführt (Eingangstemperatur 230°C, Austrittstemperatur 100°C). Das erhaltene Pulver wurde mit 2 g Kieselsäure behandelt, um es in eine rieselfähige Form zu überführen.
Nach Absiebung agglomerierter Partikel durch ein 500 µm Sieb wurde ein weißes Pulver mit einem mittleren Teilchendurchmesser von 120 µm (Luftstrahlsiebanalyse) erhalten.
Abschließend wurde das Pulver zur Verringerung der Verklumpungsneigung mit 10 g eines Antibackmittels behandelt.

### 2. Anwendungsbeispiel:

### Rezeptur:

1350 g CEM I 42,5 R
1350 g CEN Normsand
0,675 g pulverförmiger Entschäumer (Agitan P800)
x g Dispergiermittel
432,17 g Wasser (15 %)

### Mischvorschrift:

Der Frischmörtel wird nach DIN EN 196-1 Abs. 6.3, jedoch bei 35 °C hergestellt. Anschließend wurde die Auslaufzeit nach DIN EN 445 bestimmt.

**Testmethode 1**

| Mörtel | Dispergiermittel nach Herstellungsbeispiel | | Masse | Auslaufzeit [s] | | | | Differenz |
|---|---|---|---|---|---|---|---|---|
| | | | g | 5 min | 10 min | 20 min | 30 min | 30-5 min |
| 1 | 1.1 | Komp. a1 | 1,00 | 98 | * | * | * | * |
| 2 | 1.2 | Komp. a2 | 1,00 | 71 | 129 | 287 | * | * |
| 3 | 1.3 | Komp. b | 1,00 | 73 | 93 | 107 | 137 | 64 |
| 4 | 1.4 | Komp. a2 + c | 1,25 | * | * | 120 | 108 | * |
| 5 | 1.5 | Komp. b + c | 1,25 | 79 | 95 | 108 | 124 | 45 |
| 6 | 1.6 | Komp. a2 + b + c | 1,25 | 68 | 91 | 95 | 99 | 31 |

| | | | | | | | | |
|---|---|---|---|---|---|---|---|---|
| * Nicht prüfbar, da der Mörtel den Auslauftrichter verstopft und nicht vollständig ausläuft bzw. keine Berechnung möglich. | | | | | | | | |

**Testmethode 2: Fließmaß EN 1015-3**

| Mörtel | Dispergiermittel nach Herstellungsbeispiel | | Masse | Fließmaß [mm] | | | | Differenz |
|---|---|---|---|---|---|---|---|---|
| | | | g | 5 min | 10 min | 20 min | 30 min | 30-5 min |
| 1 | 1.1 | Komp. a1 | 1,00 | 220 | 189 | 120 | 100 | -120 |
| 2 | 1.2 | Komp. a2 | 1,00 | 256 | 217 | 195 | 165 | -91 |
| 3 | 1.3 | Komp. b | 1,00 | 285 | 269 | 255 | 235 | -50 |
| 4 | 1.4 | Komp. a2 + c | 1,25 | 187 | 178 | 254 | 284 | 97 |
| 5 | 1.5 | Komp. b + c | 1,25 | 233 | 232 | 264 | 283 | 50 |
| 6 | 1.6 | Komp. a2 + b + c | 1,25 | 288 | 274 | 264 | 261 | -27 |

Mischung 6 hält von allen Mischungen am längsten die Konsistenz. Eine Nachverflüssigung tritt nicht auf.

## Patentansprüche

1. Dispergiermittel, enthaltend als dispergierend wirkende Komponente die Kombination von
(a) mindestens einem Vertreter der Polycarboxylatether, mit einem Gewichtsanteil von 0,1 bis 99,9 Gew.-%,
(b) mindestens einem Vertreter der Polycarboxylatester mit einem Gewichtsanteil bis 99,8 Gew.-%,
und
(c) mindestens einem Vertreter der ungeladenen Copolymere mit einem Gewichtsanteil von 0,1 bis 99,9 Gew.-%,
wobei es sich bei dem ungeladenen Copolymer (c)
- um einen Vertreter der allgemeinen Formel (IV) 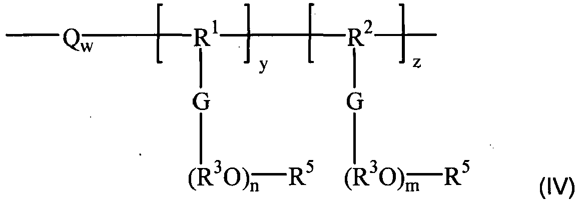 handelt,
worin Q für ein ethylenisch ungesättigtes Monomer mit mindestens einem hydrolysierbaren Rest steht, G bedeutet O, C (O)-O oder O-(CH₂)ₚ-O mit p = 2 bis 8, wobei Mischungen der Varianten von G in einem Polymer möglich sind; R¹ und R² bedeuten unabhängig voneinander mind. ein C₂-C₈-Alkyl; R³ umfasst (CH₂)_{c}, wobei es sich bei c um eine ganze Zahl zwischen 2 und 5 handelt und wobei Mischungen der Vertreter von R³ im selben Polymermolekül möglich sind; R⁵ bedeutet mind. einen Vertreter ausgewählt aus der Reihe H, einen linearen oder verzweigten, gesättigten oder ungesättigten C₁-C₂₀ aliphatischen Kohlenwasserstoffrest, einen C₅-C₈ cycloaliphatischen Kohlenwasserstoffrest oder einen substituierten oder unsubstituierten C₆-C₁₄ Arylrest; m = 1 bis 30, n = 31 bis 350, w = 1 bis 40, y = 0 bis 1 und z = 0 bis 1, wobei die Summe (y + z) > 0 ist,
oder
- um einen Vertreter der allgemeinen Formel (V) 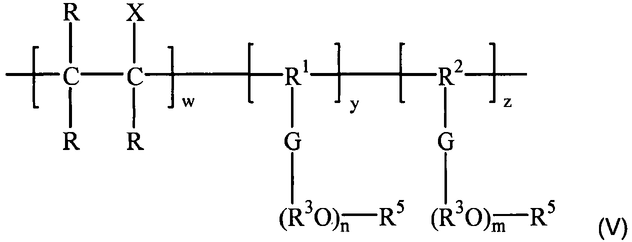 handelt, worin X für einen hydrolysierbaren Rest und R für H oder CH₃ stehen; G, p, R¹, R², R³, R⁵, m, n, w, y, z und (y + z) besitzen die unter der Formel (IV) genannten Bedeutungen,
oder
- um mind. einen Vertreter der allgemeinen Formel (VI) 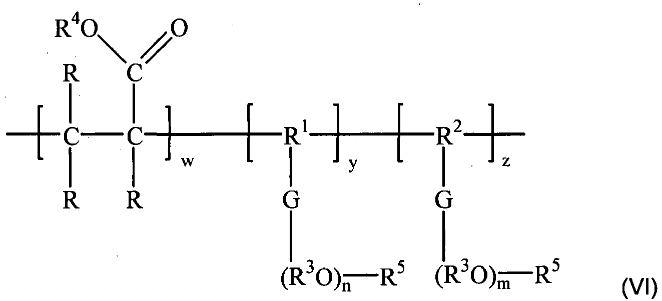 handelt, worin R⁴ mind. einen C₁-C₂₀ Alkyl- oder C₂-C₂₀ Hydroxyalkylrest bedeutet und die Reste G, p, R, R¹, R², R³, c, R⁴, R⁵ sowie m, n, w, y, z und (y + z) die unter den Formeln (IV) und (V) genannten Bedeutungen besitzen.

2. Dispergiermittel nach Anspruch 1, **dadurch gekennzeichnet, dass** es in Pulverform und insbesondere als wasserlösliches Pulver vorliegt.

3. Dispergiermittel nach Anspruch 2, **dadurch gekennzeichnet, dass** es durch Co-Trocknung der Komponenten (a), ggf. (b) sowie (c) hergestellt wurde, insbesondere unter Verwendung von mindestens einem Vertreter der Antibackmittel, Rieselhilfsmittel, Stabilisierungsmittel.

4. Dispergiermittel nach Anspruch 2, **dadurch gekennzeichnet, dass** die Komponenten (a), ggf. (b) sowie (c) einem Trocknungsverfahren und bevorzugt einer Sprühtrocknung unterzogen wurden, insbesondere als Kombinationen (a + c), (a + b + c), und besonders bevorzugt als Kombination (a + c) und das nachfolgende Vermischen mit der getrennt getrockneten Komponente b.

5. Dispergiermittel nach einem der Ansprüche 1 bis 4, **dadurch gekennzeichnet, dass** es sich bei den Polycarboxylatethern (a) um zwei voneinander verschiedene Vertreter eines Copolymers handelt, jeweils bestehend aus
1) mindestens einem olefinisch ungesättigten Carbonsäurederivats oder einem Ester oder ein Salz davon und/oder einem olefinisch ungesättigten Sulfonsäurederivats oder einem Salz davon,
und
2) mindestens einem Comonomer, welches durch die Umsetzung des Polyethermakromonomers eine Struktureinheit im Copolymer erzeugt, die durch eine der allgemeinen Formeln (la), (Ib) und/oder (Ic) repräsentiert wird: 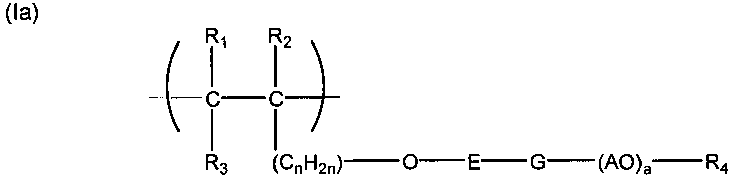 mit
R¹, R² sowie R³ jeweils gleich oder verschieden und unabhängig voneinander repräsentiert durch H und/oder eine unverzweigte oder verzweigte C₁-C₄ Alkylgruppe;
E gleich oder verschieden sowie repräsentiert durch eine unverzweigte oder verzweigte C₁-C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 7 bis 350 (bevorzugt 10-200);
R⁴ gleich oder verschieden sowie repräsentiert durch H, eine unverzweigte oder verzweigte C₁-C₂₀ Alkylgruppe, einen cycloaliphatischen Kohlenwasserstoffrest mit 5 bis 8 C-Atomen, einen gegebenenfalls substituierten Arylrest mit 6 bis 14 C-Atomen, CO-NH₂, und/oder COCH₃; 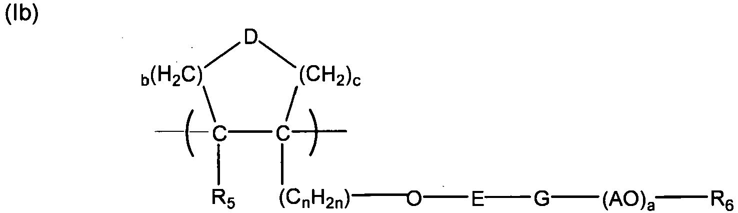
mit
R⁵ gleich oder verschieden sowie repräsentiert durch H und/oder eine unverzweigte oder verzweigte C₁-C₄ Alkylgruppe;
E gleich oder verschieden sowie repräsentiert durch eine unverzweigte oder verzweigte C₁-C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5 a gleich oder verschieden sowie repräsentiert durch eine ganze Zahl von 7 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 oder 3, wobei b + c = 2 oder 3;
R⁶ gleich oder verschieden sowie repräsentiert durch H, eine unverzweigte oder verzweigte C₁-C₂₀ Alkylgruppe, einen cycloaliphatischenKohlenwasserstoffrest mit 5 bis 8 C-Atomen, einen gegebenenfalls substituierten Arylrest mit 6 bis 14 C-Atomen, CO-NH₂, und/oder COCH₃; 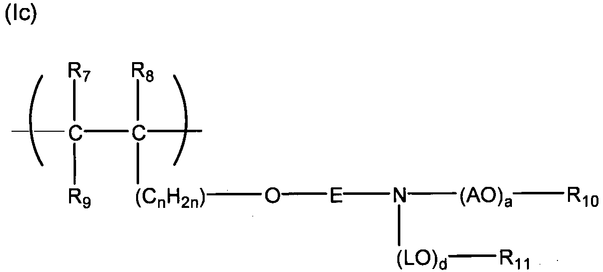
mit
R⁷, R⁸ sowie R⁹ jeweils gleich oder verschieden und unabhängig voneinander repräsentiert durch H und/oder eine unverzweigte oder verzweigte C₁-C₄ Alkylgruppe;
E gleich oder verschieden sowie repräsentiert durch eine unverzweigte oder verzweigte C₁-C₆ Alkylengruppe, eine Cyclohexylgruppe, CH₂-C₆H₁₀, ortho, meta oder para substituiert vorliegendes C₆H₄ und/oder durch eine nicht vorhandene Einheit;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 7 bis 350;
d gleich oder verschieden sowie repräsentiert durch eine ganze Zahl von 2 bis 350;
R¹⁰ gleich oder verschieden sowie repräsentiert durch H und/oder eine unverzweigte oder verzweigte C₁-C₄ Alkylgruppe,
R¹¹ gleich oder verschieden sowie repräsentiert durch H und/oder eine unverzweigte C₁-C₄ Alkylgruppe.
wobei 1.) im Copolymer a) die Einheiten, welche die Komponenten 1) oder 2) darstellen, jeweils keine innermolekularen Unterschiede aufweisen, und/oder 2.) das Copolymer a) eine polymere Mischung von Komponenten 1) und 2) darstellt, wobei in diesem Fall die Einheiten innermolekulare Unterschiede hinsichtlich der Reste R₁ und/oder R₂ und/oder R₃ und/oder R₄ und/oder R₅ und/oder R₆ und/oder R₇ und/oder und/oder R₈ und/oder R₉ und/oder R₁₀ und/oder R₁₁ und/oder n und/oder a und/oder b und/oder c und/oder d aufweisen und wobei sich die angesprochenen Unterschiede insbesondere auf die Zusammensetzung und Länge der Seitenketten beziehen.

6. Dispergiermittel nach Anspruch 5, **dadurch gekennzeichnet, dass** das Copolymer (a) die Comonomer-Komponente 1) in Anteilen von 50 bis 99 Mol-% und die Comonomer-Komponente 2) in Anteilen von 50 bis 1 Mol-% enthält.

7. Dispergiermittel nach einem der Ansprüche 5 oder 6, **dadurch gekennzeichnet, dass** das Copolymer (a) die Comonomer-Komponente 1) in Anteilen von 60 bis 90 Mol-% und die Comonomer-Komponente 2) in Anteilen von 40 bis 10 Mol-% enthält.

8. Dispergiermittel nach einem der Ansprüche 5 bis 7, **dadurch gekennzeichnet, dass** die Comonomer-Komponente 1) für eine Acrylsäure oder ein Salz davon steht, und die Comonomer-Komponente 2) als Polyethermakromonomer ein alkoxyliertes Isoprenol und/oder einen alkoxylierten Hydroxybutylvinylether und/oder einen alkoxylierten Vinylether und/oder einen alkoxylierten (Meth)allylalkohol und/oder ein vinyliertes Methylpolyalkylenglykol mit bevorzugt jeweils einer arithmetisch mittleren Zahl an Oxyalkylengruppen von 9 bis 350 enthält.

9. Dispergiermittel nach einem der Ansprüche 5 bis 8, **dadurch gekennzeichnet, dass** die Comonomer-Komponente 1) aus der Reihe Acrylsäure, Methacrylsäure, Crotonsäure, Isocrotonsäure, Allylsulfonsäure, Vinylsulfonsäure und deren geeignete Salze sowie deren Alkyl- oder Hydroxyalkylester, und/oder der Dicarbonsäuren, Phosphonsäuren und ethylenisch ungesättigter Phosphorsäureester stammt.

10. Dispergiermittel nach einem der Ansprüche 5 bis 9, **dadurch gekennzeichnet, dass** das Copolymer (a) zusätzliche Baugruppen in copolymerisierter Form aufweist.

11. Dispergiermittel nach Anspruch 10, **dadurch gekennzeichnet, dass** es sich bei den zusätzlichen Baugruppen um Styrole, Acrylamide und/oder um hydrophobe Verbindungen handelt, wobei Esterstruktureinheiten, Polypropylenoxid- und Polypropylenoxid/Polyethylenoxid-Einheiten besonders bevorzugt sind.

12. Dispergiermittel nach einem der Ansprüche 10 oder 11, **dadurch gekennzeichnet, dass** das Copolymer (a) die zusätzliche Baugruppe in Anteilen bis 5 Mol-%, bevorzugt von 0,05 bis 3,0 Mol-% und insbesondere von 0,1 bis 1,0 Mol-% enthält.

13. Dispergiermittel nach einem der Ansprüche 5 bis 12, **dadurch gekennzeichnet, dass** die Struktureinheit der Formeln (Ia), (Ib) und (Ic) für einen Allyl- oder Vinylgruppen haltigen Polyether oder für eine Isoprenyl- oder Methallyl-Verbindung steht.

14. Dispergiermittel nach einem der Ansprüche 1 bis 13, **dadurch gekennzeichnet, dass** es sich beim Vertreter der Polycarboxylatester (b) um ein Polymer handelt, herstellbar durch Polymerisation eines Monomergemisches (I), enthaltend als Hauptkomponente einen Vertreter des Monomertyps Carbonsäure.

15. Dispergiermittel nach Anspruch 14, **dadurch gekennzeichnet, dass** ein Monomer b₁) in einer Menge von 5 bis 98 Gew.-%, ein Monomer b₂) in einer Menge von 2 bis 95 Gew.-% und ein Monomer b₃) in einer Menge bis 50 Gew.-% in der Monomermischung (I) enthalten sind, wobei sich die jeweiligen Mengen der Monomere b₁), b₂) und b₃) zu 100 Gew.-% addieren.

16. Dispergiermittel nach Anspruch 15, **dadurch gekennzeichnet, dass** es sich bei dem Monomer b₁) um ein Hydroxy-ethyl(meth)acrylat, Hydroxy-propyl(meth)acrylat, Polyethylen-glykol-mono(meth)acrylat, Polypropylen-glykol-mono(meth)acrylat, Polybutylen-glykol-mono(meth)acrylat, Polyethylen-glykol-polypropylen-glykol-mono(meth)acrylat, Polyethylen-glykol-polybutylen-glykol-mono(meth)acrylat, Polypropylen-glykol-polybutylen-glykol-mono(meth)acrylat, Polyethylen-glykol-polypropylen-glykol-polybutylen-glykol-mono(meth)acrylat, Methoxy-polyethylen-glykol-mono(meth)acrylat, Methoxy-polypropylen-glykol-mono(meth)acrylat, Methoxy-polybutylen-glykol-mono(meth)acrylat, Methoxy-polyethylen-glykol-polypropylen-glykol-mono(meth)acrylat, Methoxy-polyethylen-glykol-polybutylen-glykol-mono(meth)acrylat, Methoxy-polypropylen-glykol-polybutylen-glykol-mono(meth)acrylat, Methoxy-polyethylen-glykol-polypropylen-glykol-polybutylen-glykol-mono(meth)acrylat, Ethoxy-polyethylen-glykol-mono(meth)acrylat, Ethoxy-polypropylen-glykol-mono(meth)acrylat, Ethoxy-polybutylen-glykol-mono(meth)acrylat, Ethoxy-polyethylen-glykol-polypropylen-glykol-mono(meth)acrylat, Ethoxy-polyethylen-glykol-polybutylen-glykol-mono(meth)acrylat, Ethoxy-polypropylen-glykol-polybutylen-glykol-mono(meth)acrylat, Ethoxy-polyethylen-glykol-polypropylen-glykol-polybutylen-glykol-mono(meth)acrylat oder Mischungen daraus handelt.

17. Dispergiermittel nach einem der Ansprüche 15 bis 16, **dadurch gekennzeichnet, dass** es sich bei dem Monomer b₂) um einen Vertreter der Reihe Acrylsäure, Methacrylsäure, (Meth)allylsulfonsäure, HEMA-Phosphat, einwertige Metallsalze, zweiwertige Metallsalze, Ammoniumsalze und organische Aminsalze davon und Mischungen daraus handelt.

18. Dispergiermittel nach einem der Ansprüche 15 bis 17, **dadurch gekennzeichnet, dass** es sich bei dem Monomer b₃) um mind. einen Vertreter der Ester eines aliphatischen Alkohols mit 1 bis 20 Kohlenstoffatomen mit einer ungesättigten Carbonsäure und insbesondere um Hydroxyethyl-methacrylat (HEMA) oder Hydroxypropyl-methacrylat (HPMA) handelt.

19. Dispergiermittel nach Anspruch 18, **dadurch gekennzeichnet, dass** es sich bei der ungesättigten Carbonsäure um Maleinsäure, Fumarsäure, Citraconsäure, (Meth)Allylsulfonsäure, Itaconsäure, (Meth)acrylsäure oder einwertige Metallsalze, zweiwertige Metallsalze, Ammoniumsalze oder organische Aminsalze davon handelt.

20. Dispergiermittel nach Anspruch 18, **dadurch gekennzeichnet, dass** es sich um Monoester oder Diester von ungesättigten Dicarbonsäuren, wie Maleinsäure, Fumarsäure oder Citraconsäure, mit aliphatischen C₁-C₂₀-Alkoholen, C₂-C₄-Glykolen oder mit (Alkoxy)polyalkylenglykolen handelt.

21. Dispergiermittel nach Anspruch 1, **dadurch gekennzeichnet, dass** es sich bei der Komponente (b) um ein Copolymer, aufbauend auf mind. einem der folgenden Monomere, handelt:
A) ein ethylenisch ungesättigtes Monomer, umfassend einen hydrolysierbaren Rest, wobei dieses hydrolysierbare Monomer eine aktive Bindungsstelle aufweist;
B) ein ethylenisch ungesättigtes Monomer mit mind. einer C₂-C₄-Oxyalkylenseitengruppe mit einer Kettenlänge von 1 bis 350 Einheiten.

22. Dispergiermittel nach Anspruch 21, **dadurch gekennzeichnet, dass** die Komponenten A) und B) im Copolymer (b) vertreten sind.

23. Dispergiermittel nach einem der Ansprüche 21 oder 22, **dadurch gekennzeichnet, dass** das ethylenisch ungesättigte Monomer der Komponente A) mind. ein Anhydrid oder Imid und/oder mind. ein Maleinsäureanhydrid oder Maleiimid umfasst.

24. Dispergiermittel nach einem der Ansprüche 21 bis 23, **dadurch gekennzeichnet, dass** das ethylenisch ungesättigte Monomer der Komponente A) einen (Meth)Acrylsäureester mit einer Esterfunktionalität umfasst, welcher den hydrolysierbaren Rest enthält.

25. Dispergiermittel nach Anspruch 24, **dadurch gekennzeichnet, dass** es sich bei der Esterfunktionalität mind. um ein Hydroxypropyl oder Hydroxyethyl handelt.

26. Dispergiermittel nach einem der Ansprüche 21 bis 25, **dadurch gekennzeichnet, dass** das Copolymer b) in der Komponente A) mehr als ein ethylenisch ungesättigtes Monomer mit einem hydrolysierbaren Rest aufweist.

27. Dispergiermittel nach Anspruch 26, **dadurch gekennzeichnet, dass** das ethylenisch ungesättigte Monomer der Komponente A) als Rest mind. mehr als einen Vertreter der ethylenisch ungesättigten Monomere, mind. einen Vertreter eines hydrolysierbaren Rests oder eine Mischung aus beiden aufweist.

28. Dispergiermittel nach einem der Ansprüche 26 oder 27, **dadurch gekennzeichnet, dass** der hydrolysierbare Rest mind. eine C₂-C₂₀-Alkoholfunktionalität aufweist.

29. Dispergiermittel nach einem der Ansprüche 24 bis 26, **dadurch gekennzeichnet, dass** es sich beim hydrolysierbaren Rest mind. um einen C₁-C₂₀-Alkylester, einen C₁-C₂₀-Aminoalkylester, einen C₂-C₂₀-Alkohol, einen C₂-C₂₀-Aminoalkohol oder ein Amid handelt.

30. Dispergiermittel nach einem der Ansprüche 21 bis 29, **dadurch gekennzeichnet, dass** mind. ein ethylenisch ungesättigtes Monomer der Komponente B) eine C₂-C₈-Alkelylether-Gruppe aufweist.

31. Dispergiermittel nach Anspruch 30, **dadurch gekennzeichnet, dass** das ethylenisch ungesättigte Monomer einen Vinyl-, Allyl-, (Methyl)allylether- oder Isoprenyl-Rest aufweist oder von einem ungesättigten C₂-C₈-Alkohol abgeleitet ist.

32. Dispergiermittel nach Anspruch 31, **dadurch gekennzeichnet, dass** es sich bei dem ungesättigten C₂-C₈-Alkohol um mind. einen Vertreter der Reihe Vinylalkohol, (Meth)allylalkohol, Isoprenol oder Methylbutenol handelt.

33. Dispergiermittel nach einem der Ansprüche 21 bis 32, **dadurch gekennzeichnet, dass** die ethylenisch ungesättigten Monomerseitengruppen der Komponente B) mind. eine C₄-Oxyalkylen-Einheit aufweisen.

34. Dispergiermittel nach einem der Ansprüche 21 bis 33, **dadurch gekennzeichnet, dass** mind. ein ethylenisch ungesättigtes Monomer der Komponente B) einen C₂-C₈-Carbonsäureester, der insbesondere hydrolysierbar ist, aufweist.

35. Dispergiermittel nach einem der Ansprüche 21 bis 34, **dadurch gekennzeichnet, dass** die Oxyalkylenseitengruppen mind. ein Ethylenoxid, ein Propylenoxid, ein Polyethylenoxid, ein Polypropylenoxid oder Mischungen daraus aufweisen.

36. Dispergiermittel nach einem der Ansprüche 21 bis 35, **dadurch gekennzeichnet, dass** das Copolymer (b) in der Komponente B) mind. einen nicht-ionischen und/oder einen nicht-hydrolysierbaren Monomerrest oder Mischungen daraus aufweist.

37. Dispergiermittel nach einem der Ansprüche 1 bis 36, **dadurch gekennzeichnet, dass** es sich im Falle des ungeladenen Copolymer (c) entsprechend der allgemeinen Formel (V) beim hydrolysierbaren Rest um mind. einen Vertreter der Reihe Alkylester, Aminoalkylester, Hydroxyalkylester, Aminohydroxyalkylester oder Amid handelt.

38. Dispergiermittel nach einem der Ansprüche 1 bis 36, **dadurch gekennzeichnet, dass** im Falle des ungeladenen Copolymer (c) entsprechend der allgemeinen Formel (VI) p = 4 ist, R⁴ = C₂ H₄OH oder C₃ H₆OH bedeutet, jeder der Reste R⁵ für H steht, m = 5-30, n = 31-250, w = 1,5-30, y = 0 bis 1, z = 0 bis 1 und (y + z) > 0.

39. Dispergiermittel nach Anspruch 38, **dadurch gekennzeichnet, dass** das molare Verhältnis von w zu der Summe (y + z) 1 : 1 bis 20 : 1 beträgt und vorzugsweise 2 : 1 bis 12:1.

40. Dispergiermittel nach einem der Ansprüche 1 bis 36, **dadurch gekennzeichnet, dass** es sich bei dem Copolymer (c) um ein nicht-ionisches Polyether-Polyester-Copolymer handelt.

41. Dispergiermittel nach einem der Ansprüche 1 bis 40, **dadurch gekennzeichnet, dass** es neben den dispergierend wirkenden Komponenten (a), (b) und (c) mindestens ein Additiv, ausgewählt aus der Reihe Entschäumer, Tensid, Antibackmittel, Rieselhilfsmittel, Flammenschutzmittel, Schwindreduzierer, Verzögerer, Beschleuniger, Wasserretentionsmittel, Verdicker enthält.

42. Dispergiermittel nach Anspruch 41, **dadurch gekennzeichnet, dass** es die Gesamtheit der Additive in Anteilen bis maximal 15,0 Gew.-% und vorzugsweise von 0,05 bis 5,0 Gew.-% enthält.

43. Verfahren zur Herstellung des pulverförmigen Dispergiermittels nach einem der Ansprüche 1 bis 42, durch Co-Trocknung der Komponenten (a), ggf. (b) sowie (c) und insbesondere durch Co-Sprühtrocknung, insbesondere unter Verwendung von mindestens einem Vertreter der Antibackmittel, Rieselhilfsmittel und Stabilisierungsmittel.

44. Verfahren nach Anspruch 43, **dadurch gekennzeichnet, dass** ein ungeladenes Copolymer (c) verwendet wird, welches mindestens einen Monomerbaustein enthält, dessen Seitenketten ein durchschnittliches Molekulargewicht M_{w} ≥1000, bevorzugt ≥2000 und ganz besonders bevorzugt ≥3000 aufweisen.

45. Verfahren nach einem der Ansprüche 43 oder 44, **dadurch gekennzeichnet, dass** Säurebausteine verwendet werden deren Gesamtanteil aller Ladungen in den Komponenten (a), ggf. (b) sowie (c) ≥ 5, bevorzugt ≥ 7 ganz bevorzugt ≥ 10 Masse-% beträgt.

46. Verwendung des Dispergiermittels nach einem der Ansprüche 1 bis 42 zur Kontrolle der Fließfähigkeit wässriger bauchemischer Suspensionen, vorzugsweise auf Basis anorganischer Bindemittel und insbesondere hydraulischer und/oder latent hydraulischer Bindemittel.

47. Verwendung nach Anspruch 46, **dadurch gekennzeichnet, dass** es sich beim Bindemittel um mindestens einen Vertreter ausgewählt aus der Reihe Zemente, vorzugsweise der Portlandzementklassen CEM I, CEM II, CEM III, CEM IV, CEM V und der Kalziumaluminatzemente, der Calciumsulfat-basierten Verbindungen, vorzugsweise Calciumsulfat-Halbhydrat, Anhydrit oder Gips handelt.

48. Verwendung nach einem der Ansprüche 46 oder 47, in Trockenmörtelzusammensetzungen, vorzugsweise in einem Fliesenkleber, Reparaturmörtel, Fugenmörtel, Klebemörtel, Armierungsmörtel oder Putz.

49. Verwendung nach einem der Ansprüche 46 oder 47 in fließfähigen und anorganische Bindemittel-haltigen Massen, insbesondere in selbstverlaufenden Spachtelmassen oder Fließestrichen.

## Claims

1. Dispersing agent, comprising as the component having a dispersing action the combination of
(a) at least one representative of polycarboxylate ethers with a weight content of from 0.1 to 99.9 %,
(b) at least one representative of polycarboxylate esters with a weight content of up to 99.8 %,
and
(c) at least one representative of non-charged copolymers with a weight content of from 0.1 to 99.9 %,
wherein the non-charged copolymer (c)
- is a representative of the general formula (IV) 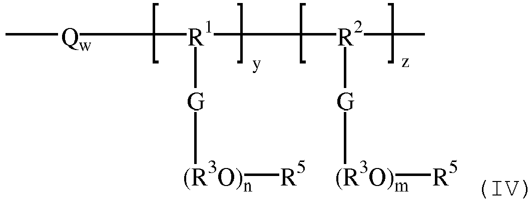 wherein Q represents an ethylenically unsaturated monomer with at least one hydrolysable radical, G denotes O, C(O)-O or O-(CH₂)ₚ-O, where p = 2 to 8, mixtures of the variants of G being possible in one polymer; R¹ and R² independently of each other denote at least one C₂-C₈-alkyl; R³ includes (CH₂)_{c}, wherein c is an integer between 2 and 5 and mixtures of the representatives of R³ in the same polymer molecule being possible; R⁵ denotes at least one representative chosen from the series of H, a linear or branched, saturated or unsaturated C₁-C₂₀ aliphatic hydrocarbon radical, a C₅-C₈ cycloaliphatic hydrocarbon radical or a substituted or unsubstituted C₆-C₁₄ aryl radical; m = 1 to 30, n = 31 to 350, w = 1 to 40, y = 0 to 1 and z = 0 to 1, wherein the sum (y + z) is > 0,
or
- is a representative of the general formula (V) 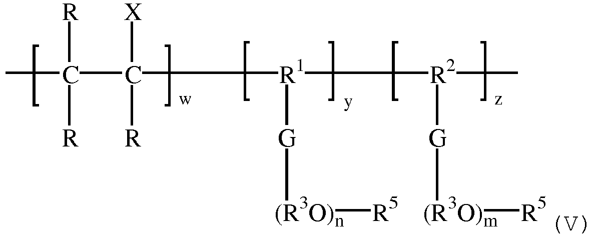 wherein X represents a hydrolysable radical and R represents H or CH₃; G, p, R¹, R², R³, R⁵, m, n, w, y, z and (y + z) have the meanings given under formula (IV),
or
- is at least one representative of the general formula (VI) 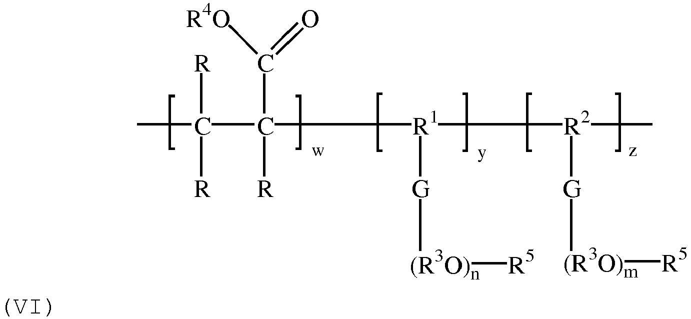 wherein R⁴ denotes at least one C₁-C₂₀ alkyl or C₂-C₂₀ hydroxyalkyl radical and the radicals G, p, R, R¹, R², R³, c, R⁴, R⁵ and m, n, w, y, z and (y + z) have the meanings given under formulae (IV) and (V).

2. Dispersing agent according to Claim 1, **characterized in that** it is in powder form and in particular as a water-soluble power.

3. Dispersing agent according to Claim 2, **characterized in that** it has been prepared by co-drying components (a), optionally (b) and (c), in particular using at least one representative of anticaking agents, pouring auxiliaries, stabilizing agents.

4. Dispersing agent according to Claim 2, **characterized in that** components (a), optionally (b) and (c) have been subjected to a drying process, and preferably a spray drying, in particular as combinations (a + c), (a + b + c), and particularly preferably as combination (a + c) and subsequent mixing with the separately dried component b.

5. Dispersing agent according to one of Claims 1 to 4, **characterized in that** the polycarboxylate ethers (a) are two representatives of a copolymer which differ from one another, in each case comprising
1) at least one olefinically unsaturated carboxylic acid derivative or an ester or a salt thereof and/or one olefinically unsaturated sulphonic acid derivative or a salt thereof,
and
2) at least one comonomer which, by the reaction of the polyether macromonomer, produces a structural unit in the copolymer which is represented by one of the general formulae (Ia), (Ib) and/or (Ic): 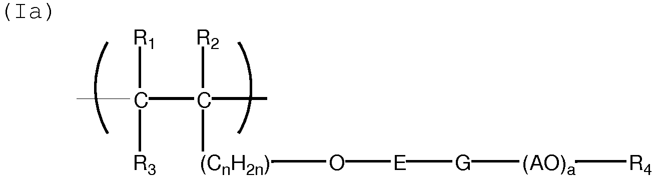 where
R1, R2 and R3 are in each case identical or different and independently of each other are represented by H and/or an unbranched or branched C1-C4 alkyl group;
E is identical or different and is represented by an unbranched or branched C1-C6 alkylene group, a cyclohexyl group, CH2-C6H10, ortho- meta- or para-substituted C6H4 and/or a unit which is not present;
G is identical or different and is represented by O, NH and/or CO-NH, with the proviso that if E is a unit which is not present, G is also in the form of a unit which is not present;
A is identical or different and is represented by CxH2x, where x = 2, 3, 4 and/or 5 (preferably x = 2) and/or CH2CH(C6H5);
n is identical or different and is represented by 0, 1, 2, 3, 4 and/or 5;
a is identical or different and is represented by an integer from 7 to 350 (preferably 10 - 200);
R⁴ is identical or different and is represented by H, an unbranched or branched C₁-C₂₀ alkyl group, a cycloaliphatic hydrocarbon radical having 5 to 8 C atoms, an optionally substituted aryl radical having 6 to 14 C atoms, CO-NH₂ and/or COCH₃; 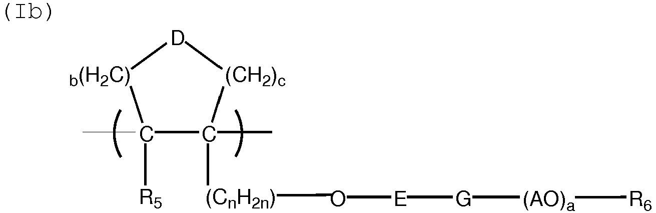
where
R5 is identical or different and is represented by H and/or an unbranched or branched C1-C4 alkyl group;
E is identical or different and is represented by an unbranched or branched C1-C6 alkylene group, a cyclohexyl group, CH2-C6H10, ortho- meta- or para-substituted C6H4 and/or by a unit which is not present;
G is identical or different and is represented by a unit which is not present, O, NH and/or CO-NH, with the proviso that if E is a unit which is not present, G is also in the form of a unit which is not present;
A is identical or different and is represented by CxH2x, where x = 2, 3, 4 and/or 5 and/or CH2CH(C6H5);
n is identical or different and is represented by 0, 1, 2, 3, 4 and/or 5;
a is identical or different and is represented by an integer from 7 to 350;
D is identical or different and is represented by a unit which is not present, NH and/or O, with the proviso that if D is a unit which is not present: b = 0, 1, 2, 3 or 4 and c = 0, 1, 2, 3 or 4, where b + c = 3 or 4, and
with the proviso that if D is NH and/or O: b = 0, 1, 2 or 3, c = 0, 1, 2 or 3, where b + c = 2 or 3;
R6 is identical or different and is represented by H, an unbranched or branched C1-C20 alkyl group, a cycloaliphatic hydrocarbon radical having 5 to 8 C atoms, an optionally substituted aryl radical having 6 to 14 C atoms, CO-NH₂ and/or COCH₃; 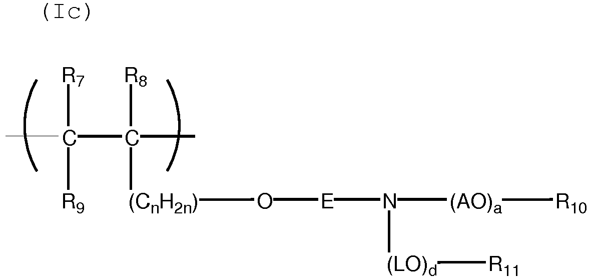
where
R7, R8 and R9 are in each case identical or different and independently of each other are represented by H and/or an unbranched or branched C1-C4 alkyl group;
E is identical or different and is represented by an unbranched or branched C1-C6 alkylene group, a cyclohexyl group, CH2-C6H10, ortho- meta- or para-substituted C6H4 and/or by a unit which is not present;
A is identical or different and is represented by CxH2x, where x = 2, 3, 4 and/or 5 and/or CH2CH(C6H5);
n is identical or different and is represented by 0, 1, 2, 3, 4 and/or 5;
L is identical or different and is represented by CxH2x, where x = 2, 3, 4 and/or 5 and/or CH2-CH(C6H5);
a is identical or different and is represented by an integer from 7 to 350;
d is identical or different and is represented by an integer from 2 to 350;
R10 is identical or different and is represented by H and/or an unbranched or branched C₁-C₄ alkyl group;
R¹¹ is identical or different and is represented by H and/or an unbranched C₁- C₄ alkyl group.
wherein 1.) in the copolymer a) the units which represent components 1) or 2) in each case have no differences within the molecule, and/or 2.) the copolymer a) is a polymeric mixture of components 1) and 2), wherein in this case the units have differences within the molecule with respect to the radicals R₁ and/or R₂ and/or R₃ and/or R₄ and/or R₅ and/or R₆ and/or R₇ and/or R₈ and/or R₉ and/or R₁₀ and/or R₁₁ and/or n and/or a and/or b and/or c and/or d, and wherein the differences referred to relate in particular to the composition and length of the side chains.

6. Dispersing agent according to Claim 5, **characterized in that** the copolymer (a) contains the comonomer component 1) in contents of from 50 to 99 mol% and the comonomer component 2) in contents of from 50 to 1 mol%.

7. Dispersing agent according to one of Claims 5 or 6, **characterized in that** the copolymer (a) contains the comonomer component 1) in contents of from 60 to 90 mol% and the comonomer component 2) in contents of from 40 to 10 mol%.

8. Dispersing agent according to one of Claims 5 to 7, **characterized in that** the comonomer component 1) represents an acrylic acid or a salt thereof, and the comonomer component 2) contains as the polyether macromonomer an alkoxylated isoprenol and/or an alkoxylated hydroxybutyl vinyl ether and/or an alkoxylated vinyl ether and/or an alkoxylated (meth)allyl alcohol and/or a vinylated methyl polyalkylene glycol with preferably in each case an arithmetically average number of oxyalkylene groups of from 9 to 350.

9. Dispersing agent according to one of Claims 5 to 8, **characterized in that** the comonomer component 1) originates from the series of acrylic acid, methacrylic acid crotonic acid, isocrotonic acid, allylsulphonic acid, vinylsulphonic acid and suitable salts thereof and alkyl or hydroxyalkyl esters thereof, and/or the dicarboxylic acids, phosphonic acids and ethylenically unsaturated phosphoric acid esters.

10. Dispersing agent according to one of Claims 5 to 9, **characterized in that** the copolymer (a) contains additional structural groups in copolymerized form.

11. Dispersing agent according to Claim 10, **characterized in that** the additional structural groups are styrenes, acrylamides and/or hydrophobic compounds, ester structural units, polypropylene oxide and polypropylene oxide/polyethylene oxide units being particularly preferred.

12. Dispersing agent according to one of Claims 10 or 11, **characterized in that** the copolymer (a) contains the additional structural group in contents of up to 5 mol%, preferably from 0.05 to 3.0 mol% and in particular from 0.1 to 1.0 mol%.

13. Dispersing agent according to one of Claims 5 to 12, **characterized in that** the structural unit of the formulae (Ia), (Ib) and (Ic) represents a polyether containing allyl or vinyl groups or an isoprenyl or methallyl compound.

14. Dispersing agent according to one of Claims 1 to 13, **characterized in that** the representative of the polycarboxylate esters (b) is a polymer which can be prepared by polymerization of a monomer mixture (I) containing as the main component a representative of the carboxylic acid monomer type.

15. Dispersing agent according to Claim 14, **characterized in that** the monomer mixture (I) contains a monomer b₁) in an amount of from 5 to 98 wt.%, a monomer b₂) in an amount of from 2 to 95 wt.% and a monomer b₃) in an amount of up to 50 wt.%, the particular amounts of the monomers b₁), b₂) and b₃) adding up to 100 wit.%.

16. Dispersing agent according to Claim 15, **characterized in that** the monomer b₁) is a hydroxy-ethyl (meth)acrylate, hydroxy-propyl (meth)acrylate, polyethylene glycol mono(meth)acrylate, polypropylene glycol mono(meth)acrylate, polybutylene glycol mono(meth)acrylate, polyethylene glycol-polypropylene glycol mono(meth)acrylate, polyethylene glycol-polybutylene glycol mono(meth)acrylate, polypropylene glycol-polybutylene glycol mono(meth)acrylate, polyethylene glycol-polypropylene glycol-polybutylene glycol mono(meth)acrylate, methoxy-polyethylene glycol mono(meth)acrylate, methoxy-polypropylene glycol mono(meth)acrylate, methoxy-polybutylene glycol mono(meth)acrylate, methoxy-polyethylene glycol-polypropylene glycol mono(meth)acrylate, methoxy-polyethylene glycol-polybutylene glycol mono(meth)acrylate, methoxy-polypropylene glycol-polybutylene glycol mono(meth)acrylate, methoxy-polyethylene glycol-polypropylene glycol-polybutylene glycol mono(meth)acrylate, ethoxy-polyethylene glycol mono(meth)acrylate, ethoxy-polypropylene glycol mono(meth)acrylate, ethoxy-polybutylene glycol mono(meth)acrylate, ethoxy-polyethylene glycol-polypropylene glycol mono(meth)acrylate, ethoxy-polyethylene glycol-polybutylene glycol mono(meth)acrylate, ethoxy-polypropylene glycol-polybutylene glycol mono(meth)acrylate, ethoxy-polyethylene glycol-polypropylene glycol-polybutylene glycol mono(meth)acrylate or mixtures thereof.

17. Dispersing agent according to one of Claims 15 or 16, **characterized in that** the monomer b₂) is a representative of the series of acrylic acid, methacrylic acid, (meth)allylsulphonic acid, HEMA phosphate, monovalent metal salts, divalent metal salts, ammonium salts and organic amine salts thereof and mixtures thereof.

18. Dispersing agent according to one of Claims 15 to 17, **characterized in that** the monomer b₃) is at least one representative of esters of an aliphatic alcohol having 1 to 20 carbon atoms with an unsaturated carboxylic acid, and in particular hydroxyethyl methacrylate (HEMA) or hydroxypropyl methacrylate (HPMA).

19. Dispersing agent according to Claim 18, **characterized in that** the unsaturated carboxylic acid is maleic acid, fumaric acid, citraconic acid (meth)allylsulphonic acid, itaconic acid, (meth)acrylic acid or monovalent metal salts, divalent metal salts, ammonium salts or organic amine salts thereof.

20. Dispersing agent according to Claim 18, **characterized in that** it is monoesters or diesters of unsaturated carboxylic acids, such as maleic acid, fumaric acid or citraconic acid, with aliphatic C₁-C₂₀-alcohols, C₂-C₄-glycols or with (alkoxy)polyalkylene glycols.

21. Dispersing agent according to Claim 1, **characterized in that** component (b) is a copolymer built up from at least one of the following monomers:
A) an ethylenically unsaturated monomer including a hydrolysable radical, wherein this hydrolysable monomer has an active bonding site;
B) an ethylenically unsaturated monomer with at least one C2-C4 oxyalkylene side group having a chain length of from 1 to 350 units.

22. Dispersing agent according to Claim 21, **characterized in that** components A) and B) are represented in the copolymer (b).

23. Dispersing agent according to one of Claims 21 or 22, **characterized in that** the ethylenically unsaturated monomer of component A) includes at least one anhydride or imide and/or at least one maleic anhydride or maleimide.

24. Dispersing agent according to one of Claims 21 to 23, **characterized in that** the ethylenically unsaturated monomer of component A) includes a (meth)acrylic acid ester with an ester functionality which contains the hydrolysable radical.

25. Dispersing agent according to Claim 24, **characterized in that** the ester functionality is at least one hydroxypropyl or hydroxyethyl.

26. Dispersing agent according to one of Claims 21 to 25, **characterized in that** the copolymer b) contains more than one ethylenically unsaturated monomer with a hydrolysable radical in component A).

27. Dispersing agent according to Claim 26, **characterized in that** the ethylenically unsaturated monomer of component A) contains as the radical at least more than one representative of the ethylenically unsaturated monomers, at least one representative of a hydrolysable radical or a mixture of the two.

28. Dispersing agent according to one of Claims 26 or 27, **characterized in that** the hydrolysable radical contains at least one C₂-C₂₀-alcohol functionality.

29. Dispersing agent according to one of Claims 24 to 26, **characterized in that** the hydrolysable radical is at least one C1-C20-alkyl ester, one C1-C20-aminoalkyl ester, one C2-C20-alcohol, one C2-C20-amino alcohol or one amide.

30. Dispersing agent according to one of Claims 21 to 29, **characterized in that** at least one ethylenically unsaturated monomer of component B) contains a C2-C8-alkyl ether group.

31. Dispersing agent according to Claim 30, **characterized in that** the ethylenically unsaturated monomer contains a vinyl, allyl, (methyl)allyl ether or isoprenyl radical or is derived from an unsaturated C2-C8-alcohol.

32. Dispersing agent according to Claim 31, **characterized in that** the unsaturated C2-C8-alcohol is at least one representative from the series of vinyl alcohol, (meth)allyl alcohol, isoprenol or methylbutenol.

33. Dispersing agent according to one of Claims 21 to 32, **characterized in that** the ethylenically unsaturated monomer side groups of component B) contain at least one C₄-oxyalkylene unit.

34. Dispersing agent according to one of Claims 21 to 33, **characterized in that** at least one ethylenically unsaturated monomer of component B) contains a C2-C8-carboxylic acid ester, which in particular is hydrolysable.

35. Dispersing agent according to one of Claims 21 to 34, **characterized in that** the oxyalkylene side groups contain at least one ethylene oxide, one propylene oxide, one polyethylene oxide, one polypropylene oxide or mixtures thereof.

36. Dispersing agent according to one of Claims 21 to 35, **characterized in that** the copolymer b) in component B) contains at least one nonionic and/or one non-hydrolysable monomer radical or mixtures thereof.

37. Dispersing agent according to one of Claims 1 to 36, **characterized in that**, in the case of the non-charged copolymer (c) corresponding to the general formula (V), the hydrolysable radical is at least one representative from the series of alkyl ester, aminoalkyl ester, hydroxyalkyl ester, aminohydroxyalkyl ester or amide.

38. Dispersing agent according to one of Claims 1 to 36, **characterized in that**, in the case of the non-charged copolymer (c) corresponding to the general formula (VI), p is 4, R4 denotes C2H4OH or C3H6OH, each of the radicals R5 represents H, m = 5 - 30, n = 31 - 250, w = 1.5 - 30, y = 0 to 1, z = 0 to 1 and (y + z) is > 0.

39. Dispersing agent according to Claim 38, **characterized in that** the molar ratio of w to the sum (y + z) is 1 : 1 to 20 : 1 and preferably 2 : 1 to 12 : 1.

40. Dispersing agent according to one of Claims 1 to 36, **characterized in that** the copolymer (c) is a nonionic polyether/polyester copolymer.

41. Dispersing agent according to one of Claims 1 to 40, **characterized in that**, in addition to the components (a), (b) and (c) having a dispersing action, it comprises at least one additive chosen from the series of defoamer, surfactant, anticaking agent, pouring auxiliary, flameproofing agent, shrinkage reducing agent, retardant, accelerator, water retention agent, thickener.

42. Dispersing agent according to Claim 41, **characterized in that** it comprises the total additives in contents up to a maximum of 15.0 wt.% and preferably from 0.05 to 5.0 wt.%.

43. Process for the preparation of the pulverulent dispersing agent according to one of Claims 1 to 42 by co-drying components (a), optionally (b) and (c), and in particular by co-spray drying, in particular using at least one representative of anticaking agents, pouring auxiliaries and stabilizing agents.

44. Process according to Claim 43, **characterized in that** a non-charged copolymer (c) which contains at least one monomer unit of which the side chains have an average molecular weight Mw of ≥ 1,000, preferably ≥ 2,000 and very particularly preferably ≥ 3,000 is used.

45. Process according to one of Claims 43 or 44, **characterized in that** acid units of which the total content of all charges in components (a), optionally (b) and (c) is ≥ 5, preferably ≥ 7, very preferably ≥ 10 % by weight are used.

46. Use of the dispersing agent according to one of Claims 1 to 42 for controlling the flowability of aqueous chemical construction suspensions, preferably based on inorganic binders and in particular hydraulic and/or latent hydraulic binders.

47. Use according to Claim 46, **characterized in that** the binder is at least one representative chosen from the series of cements, preferably of the Portland cement classes CEM I, CEM II, CEM III, CEM IV, CEM V and the calcium aluminate cements, calcium sulphate-based compounds, preferably calcium sulphate hemihydrate, anhydrite or gypsum.

48. Use according to one of Claims 46 or 47 in dry mortar compositions, preferably in a tile adhesive, repair mortar, jointing mortar, bonding mortar, reinforcing mortar or plaster.

49. Use according to one of Claims 46 or 47 in flowable and inorganic binder-containing compositions, in particular in self-running stopper compositions or cast screeds.

## Revendications

1. Dispersant, contenant en tant que composant à effet dispersant la combinaison de
(a) au moins un représentant des éthers de polycarboxylate, en une proportion en poids de 0,1 à 99,9 % en poids,
(b) au moins un représentant des esters de polycarboxylate, en une proportion en poids de jusqu'à 99,8 % en poids,
et
(c) au moins un représentant des copolymères non chargés en une proportion en poids de 0,1 à 99,9 % en poids,
le copolymère non chargé (c) étant
- un représentant de la formule générale (IV) 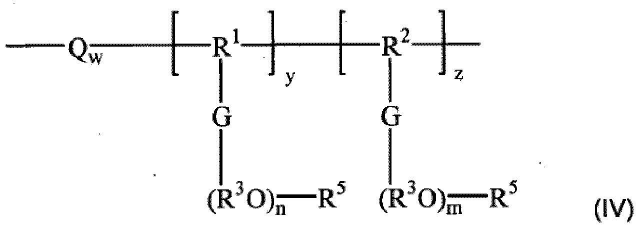 dans laquelle Q représente un monomère éthyléniquement insaturé contenant au moins un radical hydrolysable, G signifie O, C(O)-O ou O-(CH₂)ₚ-O avec p = 2 à 8, des mélanges des variantes de G dans un polymère étant possibles ; R¹ et R² signifient indépendamment l'un de l'autre au moins un alkyle en C₂-C₈ ; R³ comprend (CH₂)_{c}, c étant un nombre entier compris entre 2 et 5, et des mélanges des représentants de R³ dans la même molécule polymère étant possibles ; R⁵ signifie au moins un représentant choisi dans la série constituée par H, un radical hydrocarboné aliphatique en C₁-C₂₀ linéaire ou ramifié, saturé ou insaturé, un radical hydrocarboné cycloaliphatique en C₅-C₈ ou un radical aryle en C₆-C₁₄ substitué ou non substitué ; m = 1 à 30, n = 31 à 350, w = 1 à 40, y = 0 à 1, et z = 0 à 1, la somme (y + z) > 0,
ou
- un représentant de la formule générale (V) 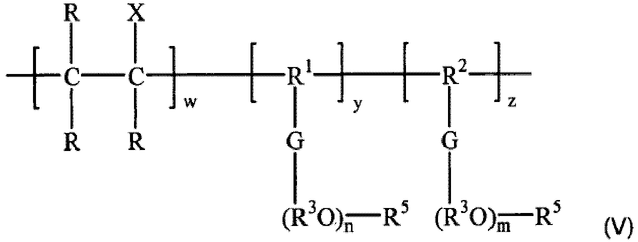 dans laquelle X représente un radical hydrolysable et R représente H ou CH₃ ; G, p, R¹, R², R³, R⁵, m, n, w, y, z et (y + z) ont les significations indiquées pour la formule (IV),
ou
- au moins un représentant de la formule générale (VI) 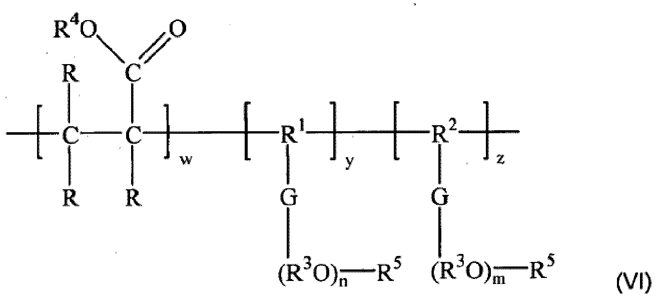 dans laquelle R⁴ signifie au moins un radical alkyle en C₁-C₂₀ ou hydroxyalkyle en C₂-C₂₀, et les radicaux G, p, R, R¹, R², R³, C, R⁴, R⁵, ainsi que m, n, w, y, z et (y + z) ont les significations indiquées pour les formules (IV) et (V).

2. Dispersant selon la revendication 1, **caractérisé en ce qu'**il se présente sous forme de poudre et notamment sous la forme d'une poudre soluble dans l'eau.

3. Dispersant selon la revendication 2, **caractérisé en ce qu'**il a été fabriqué par co-séchage des composants (a), éventuellement (b) et (c), notamment en utilisant au moins un représentant des agents de démoulage, des agents antiagglomérants, des stabilisateurs.

4. Dispersant selon la revendication 2, **caractérisé en ce que** les composants (a), éventuellement (b) et (c) ont été soumis à un procédé de séchage et de préférence à un séchage par pulvérisation, notamment sous la forme des combinaisons (a + c), (a + b + c), et de manière particulièrement préférée sous la forme de la combinaison (a + c), avec mélange ultérieur avec le composant b séché séparément.

5. Dispersant selon l'une quelconque des revendications 1 à 4, **caractérisé en ce que** les éthers de polycarboxylate (a) sont deux représentants différents l'un de l'autre d'un copolymère, chacun constitués par
1) au moins un dérivé d'acide carboxylique oléfiniquement insaturé ou un ester ou un sel de celui-ci et/ou un dérivé d'acide sulfonique oléfiniquement insaturé ou un sel de celui-ci,
et
2) au moins un comonomère, qui forme par la réaction du macromonomère de polyéther une unité structurale dans le copolymère, qui est représentée par une des formules générales (Ia), (Ib) et/ou (Ic) : 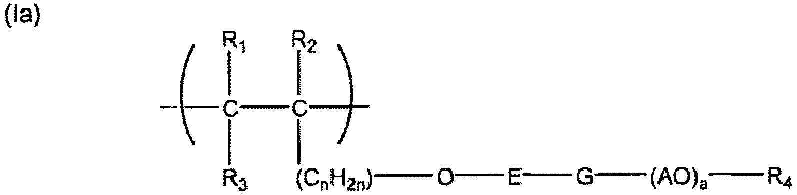 dans laquelle
R¹, R² et R³ sont chacun identiques ou différents, et représentent indépendamment les uns des autres H et/ou un groupe alkyle en C₁-C₄ non ramifié ou ramifié ;
les E sont identiques ou différents, et représentent un groupe alkylène en C₁-C₆ non ramifié ou ramifié, un groupe cyclohexyle, CH₂-C₆H₁₀, C₆H₄ à substitution ortho, méta ou para, et/ou une unité non présente ;
les G sont identiques ou différents, et représentent O, NH et/ou CO-NH, à condition que si E représente une unité non présente, G représente également une unité non présente ;
les A sont identiques ou différents, et représentent CₓH₂ₓ avec x = 2, 3, 4 et/ou 5 (de préférence x = 2) et/ou CH₂CH(C₆H₅) ;
les n sont identiques ou différents, et représentent 0, 1, 2, 3, 4 et/ou 5 ;
les a sont identiques ou différents, et représentent un nombre entier de 7 à 350 (de préférence 10 à 200) ;
les R⁴ sont identiques ou différents, et représentent H, un groupe alkyle en C₁-C₂₀ non ramifié ou ramifié, un radical hydrocarboné cycloaliphatique contenant 5 à 8 atomes C, un radical aryle éventuellement substitué contenant 6 à 14 atomes C, CO-NH₂ et/ou COCH₃ ; 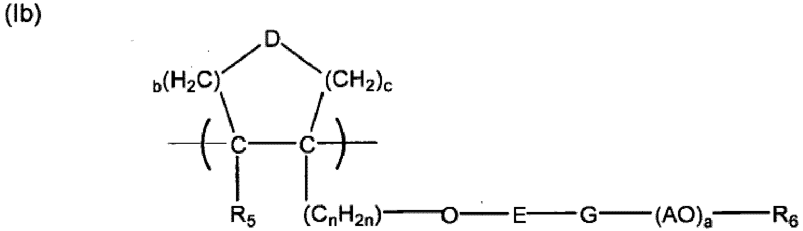
dans laquelle
les R⁵ sont identiques ou différents, et représentent H et/ou un groupe alkyle en C₁-C₄ non ramifié ou ramifié ; les E sont identiques ou différents, et représentent un groupe alkylène en C₁-C₆ non ramifié ou ramifié, un groupe cyclohexyle, CH₂-C₆H₁₀, C₆H₄ à substitution ortho, méta ou para, et/ou une unité non présente ;
les G sont identiques ou différents, et représentent une unité non présente, O, NH et/ou CO-NH, à condition que si E représente une unité non présente, G représente également une unité non présente ;
les A sont identiques ou différents, et représentent CₓH₂ₓ avec x = 2, 3, 4 et/ou 5 et/ou CH₂CH(C₆H₆) ;
les n sont identiques ou différents, et représentent 0, 1, 2, 3, 4 et/ou 5 ;
les a sont identiques ou différents, et représentent un nombre entier de 7 à 350 ;
les D sont identiques ou différents, et représentent une unité non présente, NH et/ou O, à condition que si D représente une unité non présente : b = 0, 1, 2, 3 ou 4, et c = 0, 1, 2, 3 ou 4, avec b + C = 3 ou 4, et à condition que lorsque D représente NH et/ou O : b = 0, 1, 2 ou 3, c = 0, 1, 2 ou 3, avec b + C = 2 ou 3 ;
les R⁶ sont identiques ou différents, et représentent H, un groupe alkyle en C₁-C₂₀ non ramifié ou ramifié, un radical hydrocarboné cycloaliphatique contenant 5 à 8 atomes C, un radical aryle éventuellement substitué contenant 6 à 14 atomes C, CO-NH₂ et/ou COCH₃ ; 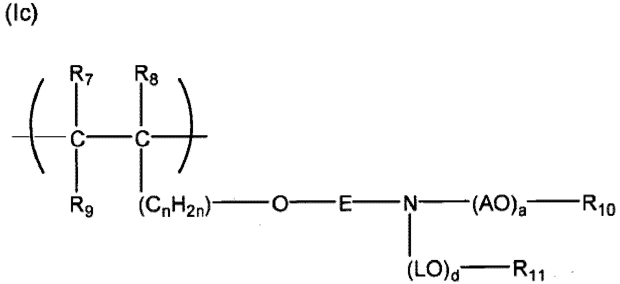
dans laquelle
R⁷, R⁸ et R⁹ sont chacun identiques ou différents, et représentent indépendamment les uns des autres H et/ou un groupe alkyle en C₁-C₄ non ramifié ou ramifié ;
les E sont identiques ou différents, et représentent un groupe alkylène en C₁-C₆ non ramifié ou ramifié, un groupe cyclohexyle, CH₂-C₆H₁₀, C₆H₄ à substitution ortho, méta ou para, et/ou une unité non présente ;
les A sont identiques ou différents, et représentent CₓH₂ₓ avec x = 2, 3, 4 et/ou 5 et/ou CH₂CH(C₆H₅) ;
les n sont identiques ou différents, et représentent 0, 1, 2, 3, 4 et/ou 5 ;
les L sont identiques ou différents, et représentent CₓH₂ₓ avec x = 2, 3, 4 et/ou 5 et/ou CH₂-CH(C₆H₅) ;
les a sont identiques ou différents, et représentent un nombre entier de 7 à 350 ;
les d sont identiques ou différents, et représentent un nombre entier de 2 à 350 ;
les R¹⁰ sont identiques ou différents, et représentent H et/ou un groupe alkyle en C₁-C₄ non ramifié ou ramifié ; les R¹¹ sont identiques ou différents, et représentent H et/ou un groupe alkyle en C₁-C₄ non ramifié ;
1.) dans le copolymère a), les unités qui représentent les composants 1) ou 2) ne présentant à chaque fois aucune différence intramoléculaire et/ou 2.) le copolymère a) étant un mélange polymère des composants 1) et 2), dans ce cas, les unités présentant des différences intramoléculaires au regard des radicaux R₁ et/ou R₂ et/ou R₃ et/ou R₄ et/ou R₅ et/ou R₆ et/ou R₇ et/ou R₈ et/ou R₉ et/ou R₁₀ et/ou R₁₁ et/ou n et/ou a et/ou b et/ou c et/ou d, et lesdites différences se rapportant notamment à la composition et à la longueur des chaînes latérales.

6. Dispersant selon la revendication 5, **caractérisé en ce que** le copolymère (a) contient le composant comonomère 1) en proportions de 50 à 99 % en moles et le composant comonomère 2) en proportions de 50 à 1 % en moles.

7. Dispersant selon l'une quelconque des revendications 5 ou 6, **caractérisé en ce que** le copolymère (a) contient le composant comonomère 1) en proportions de 60 à 90 % en moles et le composant comonomère 2) en proportions de 40 à 10 % en moles.

8. Dispersant selon l'une quelconque des revendications 5 à 7, **caractérisé en ce que** le composant comonomère 1) représente un acide acrylique ou un sel de celui-ci, et le composant comonomère 2) contient en tant que macromonomère de polyéther un isoprénol alcoxylé et/ou un éther d'hydroxybutyle et de vinyle alcoxylé et/ou un éther de vinyle alcoxylé et/ou un alcool (méth)allylique alcoxylé et/ou un méthylpolyalkylène glycol vinylé contenant à chaque fois de préférence un nombre arithmétique moyen de groupes oxyalkylène de 9 à 350.

9. Dispersant selon l'une quelconque des revendications 5 à 8, **caractérisé en ce que** le composant comonomère 1) provient de la série constituée par l'acide acrylique, l'acide méthacrylique, l'acide crotonique, l'acide isocrotonique, l'acide allylsulfonique, l'acide vinylsulfonique et leurs sels appropriés, ainsi que leurs esters alkyliques ou hydroxyalkyliques, et/ou les acides dicarboxyliques, les acides phosphoniques et les esters d'acides phosphoriques éthyléniquement insaturés.

10. Dispersant selon l'une quelconque des revendications 5 à 9, **caractérisé en ce que** le copolymère (a) comprend en outre des groupes constitutifs sous forme copolymérisée.

11. Dispersant selon la revendication 10, **caractérisé en ce que** les groupes constitutifs supplémentaires sont des styrènes, des acrylamides et/ou des composés hydrophobes, les unités structurales ester, les unités oxyde de polypropylène et oxyde de polypropylène/oxyde de polyéthylène étant particulièrement préférées.

12. Dispersant selon l'une quelconque des revendications 10 ou 11, **caractérisé en ce que** le copolymère (a) contient le groupe constitutif supplémentaire en proportions de jusqu'à 5 % en moles, de préférence de 0,05 à 3,0 % en moles et notamment de 0,1 à 1,0 % en moles.

13. Dispersant selon l'une quelconque des revendications 5 à 12, **caractérisé en ce que** l'unité structurale des formules (Ia), (Ib) et (Ic) représente un polyéther contenant des groupes allyle ou vinyle ou un composé d'isoprényle ou de méthallyle.

14. Dispersant selon l'une quelconque des revendications 1 à 13, **caractérisé en ce que** le représentant des esters de polycarboxylate (b) est un polymère, pouvant être fabriqué par polymérisation d'un mélange de monomères (I), contenant en tant que composant principal un représentant du type de monomère acide carboxylique.

15. Dispersant selon la revendication 14, **caractérisé en ce qu'**un monomère b₁) est contenu en une quantité de 5 à 98 % en poids, un monomère b₂) en une quantité de 2 à 95 % en poids et un monomère b₃) en une quantité de jusqu'à 50 % en poids dans le mélange de monomères (I), la somme des quantités respectives des monomères b₁), b₂) et b₃) étant de 100 % en poids.

16. Dispersant selon la revendication 15, **caractérisé en ce que** le monomère b₁) est un (méth)acrylate d'hydroxyéthyle, un (méth)acrylate d'hydroxypropyle, un mono(méth)acrylate de polyéthylène glycol, un mono(méth)acrylate de polypropylène glycol, un mono(méth)acrylate de polybutylène glycol, un mono(méth)acrylate de polyéthylène glycol-polypropylène glycol, un mono(méth)acrylate de polyéthylène glycol-polybutylène glycol, un mono(méth)acrylate de polypropylène glycol-polybutylène glycol, un mono(méth)acrylate de polyéthylène glycol-polypropylène glycol-polybutylène glycol, un mono(méth)acrylate de méthoxy-polyéthylène glycol, un mono(méth)acrylate de méthoxypolypropylène glycol, un mono(méth)acrylate de méthoxypolybutylène glycol, un mono(méth)acrylate de méthoxypolyéthylène glycol-polypropylène glycol, un mono(méth)acrylate de méthoxypolyéthylène glycol-polybutylène glycol, un mono(méth)acrylate de méthoxypolypropylène glycol-polybutylène glycol, un mono(méth)acrylate de méthoxypolyéthylène glycol-polypropylène glycol-polybutylène glycol, un mono(méth)acrylate d'éthoxypolyéthylène glycol, un mono(méth)acrylate d'éthoxypolypropylène glycol, un mono(méth)acrylate d'éthoxypolybutylène glycol, un mono(méth)acrylate d'éthoxypolyéthylène glycol-polypropylène glycol, un mono(méth)acrylate d'éthoxy-polyéthylène glycol-polybutylène glycol, un mono(méth)acrylate d'éthoxypolypropylène glycol-polybutylène glycol, un mono(méth)acrylate d'éthoxypolyéthylène glycol-polypropylène glycol-polybutylène glycol ou leurs mélanges.

17. Dispersant selon l'une quelconque des revendications 15 à 16, **caractérisé en ce que** le monomère b₂) est un représentant de la série constituée par l'acide acrylique, l'acide (méth)acrylique, l'acide (méth)allylsulfonique, l'HEMA-phosphate, les sels métalliques monovalents, les sels métalliques bivalents, les sels d'ammonium et leurs sels d'amines organiques, et leurs mélanges.

18. Dispersant selon l'une quelconque des revendications 15 à 17, **caractérisé en ce que** le monomère b₃) est au moins un représentant des esters d'un alcool aliphatique contenant 1 à 20 atomes de carbone avec un acide carboxylique insaturé, et notamment le (méth)acrylate d'hydroxyéthyle (HEMA) ou le méthacrylate d'hydroxypropyle (HPMA).

19. Dispersant selon la revendication 18, **caractérisé en ce que** l'acide carboxylique insaturé est l'acide maléique, l'acide fumarique, l'acide citraconique, l'acide (méth)allylsulfonique, l'acide itaconique, l'acide (méth)acrylique ou leurs sels métalliques monovalents, leurs sels métalliques bivalents, leurs sels d'ammonium ou leurs sels d'amines organiques.

20. Dispersant selon la revendication 18, **caractérisé en ce qu'**il s'agit de monoesters ou de diesters d'acides dicarboxyliques insaturés, tels que l'acide maléique, l'acide fumarique ou l'acide citraconique, avec des alcools en C₁-C₂₀ aliphatiques, des glycols en C₂-C₄ ou avec des (alcoxy)polyalkylène glycols.

21. Dispersant selon la revendication 1, **caractérisé en ce que** le composant (b) est un copolymère, constitué d'au moins un des monomères suivantes :
A) un monomère éthyléniquement insaturé, comprenant un radical hydrolysable, ce monomère hydrolysable comprenant un emplacement de liaison actif ;
B) un monomère éthyléniquement insaturé contenant au moins un groupe latéral oxyalkylène en C₂-C₄ ayant une longueur de chaîne de 1 à 350 unités.

22. Dispersant selon la revendication 21, **caractérisé en ce que** les composants A) et B) sont représentés dans le copolymère (b).

23. Dispersant selon l'une quelconque des revendications 21 ou 22, **caractérisé en ce que** le monomère éthyléniquement insaturé du composant A) comprend au moins un anhydride ou un imide et/ou au moins un anhydride de l'acide maléique ou un maléimide.

24. Dispersant selon l'une quelconque des revendications 21 à 23, **caractérisé en ce que** le monomère éthyléniquement insaturé du composant A) comprend un ester de l'acide (méth)acrylique ayant une fonctionnalité ester qui contient le radical hydrolysable.

25. Dispersant selon la revendication 24, **caractérisé en ce que** la fonctionnalité ester est au moins un hydroxypropyle ou hydroxyéthyle.

26. Dispersant selon l'une quelconque des revendications 21 à 25, **caractérisé en ce que** le copolymère b) dans le composant A) comprend plus d'un monomère éthyléniquement insaturé contenant un radical hydrolysable.

27. Dispersant selon la revendication 26, **caractérisé en ce que** le monomère éthyléniquement insaturé du composant A) comprend en tant que radical au moins plus d'un représentant des monomères éthyléniquement insaturés, au moins un représentant d'un radical hydrolysable ou un mélange des deux.

28. Dispersant selon l'une quelconque des revendications 26 ou 27, **caractérisé en ce que** le radical hydrolysable comprend au moins une fonctionnalité alcool en C₂-C₂₀.

29. Dispersant selon l'une quelconque des revendications 24 à 26, **caractérisé en ce que** le radical hydrolysable est au moins un ester alkylique en C₁-C₂₀, un ester aminoalkylique en C₁-C₂₀, un alcool en C₂-C₂₀, un aminoalcool en C₂-C₂₀ ou un amide.

30. Dispersant selon l'une quelconque des revendications 21 à 29, **caractérisé en ce qu'**au moins un monomère éthyléniquement insaturé du composant B) comprend un groupe éther alkylique en C₂-C₆.

31. Dispersant selon la revendication 30, **caractérisé en ce que** le monomère éthyléniquement insaturé comprend un radical vinylique, allylique, éther (méthyl)allylique ou isoprénylique, ou dérive d'un alcool en C₂-C₈ insaturé.

32. Dispersant selon la revendication 31, **caractérisé en ce que** l'alcool en C₂-C₈ insaturé est au moins un représentant de la série constituée par l'alcool vinylique, l'alcool (méth)allylique, l'isoprénol ou le méthylbuténol.

33. Dispersant selon l'une quelconque des revendications 21 à 32, **caractérisé en ce que** les groupes latéraux monomères éthyléniquement insaturés du composant B) comprennent au moins une unité oxyalkylène en C₄.

34. Dispersant selon l'une quelconque des revendications 21 à 33, **caractérisé en ce qu'**au moins un monomère éthyléniquement insaturé du composant B) comprend un ester d'acide carboxylique en C₂-C₈, qui est notamment hydrolysable.

35. Dispersant selon l'une quelconque des revendications 21 à 34, **caractérisé en ce que** les groupes latéraux oxyalkylène comprennent au moins un oxyde d'éthylène, un oxyde de propylène, un oxyde de polyéthylène, un oxyde de polypropylène ou leurs mélanges.

36. Dispersant selon l'une quelconque des revendications 21 à 35, **caractérisé en ce que** le copolymère (b) dans le composant B) comprend au moins un radical monomère non ionique et/ou non hydrolysable ou leurs mélanges.

37. Dispersant selon l'une quelconque des revendications 1 à 36, **caractérisé en ce que**, dans le cas du copolymère non chargé (c) correspondant à la formule générale (V), le radical hydrolysable est au moins un représentant de la série constituée par les esters alkyliques, les esters aminoalkyliques, les esters hydroxyalkyliques, les esters aminohydroxyalkyliques ou les amides.

38. Dispersant selon l'une quelconque des revendications 1 à 36, **caractérisé en ce que**, dans le cas du copolymère non chargé (c) correspondant à la formule générale (VI), p = 4, R⁴ = C₂H₄OH ou C₃H₆OH, chacun des radicaux R⁵ représentant H, m = 5 à 30, n = 31 à 250, w = 1,5 à 30, y = 0 à 1, z = 0 à 1 et (y + z) > 0.

39. Dispersant selon la revendication 38, **caractérisé en ce que** le rapport molaire entre w et la somme (y + z) est de 1:1 à 20:1, et de préférence 2:1 à 12:1.

40. Dispersant selon l'une quelconque des revendications 1 à 36, **caractérisé en ce que** le copolymère (c) est un copolymère polyéther-polyester non ionique.

41. Dispersant selon l'une quelconque des revendications 1 à 40, **caractérisé en ce qu'**il contient en plus des composants à effet dispersant (a), (b) et (c) au moins un additif, choisi dans la série constituée par les antimousses, les tensioactifs, les agents de démoulage, les agents antiagglomérants, les agents ignifuges, les réducteurs de retrait, les retardateurs, les accélérateurs, les agents de rétention de l'eau, les épaississants.

42. Dispersant selon la revendication 41, **caractérisé en ce qu'**il contient la totalité des additifs en proportions d'au plus 15,0 % en poids et de préférence de 0,05 à 5,0 % en poids.

43. Procédé de fabrication du dispersant en poudre selon l'une quelconque des revendications 1 à 42, par co-séchage des composants (a), éventuellement (b) et (c), et notamment par co-séchage par pulvérisation, notamment en utilisant au moins un représentant des agents de démoulage, des agents antiagglomérants et des stabilisateurs.

44. Procédé selon la revendication 43, **caractérisé en ce qu'**un copolymère non chargé (c) est utilisé, qui contient au moins un constituant monomère dont les chaînes latérales présentent un poids moléculaire moyen M_{w} ≥ 1 000, de préférence ≥ 2 000 et de manière tout particulièrement préférée ≥ 3 000.

45. Procédé selon l'une quelconque des revendications 43 ou 44, **caractérisé en ce que** des constituants acides sont utilisés, dont la proportion totale de toutes les charges dans les composants (a), éventuellement (b) et (c) est ≥ 5, de préférence ≥ 7, de manière tout particulièrement préférée ≥ 10 % en masse.

46. Utilisation du dispersant selon l'une quelconque des revendications 1 à 42 pour la régulation de la fluidité de suspensions aqueuses chimiques pour le bâtiment, de préférence à base de liants inorganiques et notamment de liants hydrauliques et/ou hydrauliques latents.

47. Utilisation selon la revendication 46, **caractérisée en ce que** le liant est au moins un représentant choisi dans la série constituée par les ciments, de préférence les classes de ciment de Portland CEM I, CEM II, CEM III, CEM IV, CEM V, et les ciments d'aluminate de calcium, les composés à base de sulfate de calcium, de préférence le semi-hydrate de sulfate de calcium, l'anhydrite ou le gypse.

48. Utilisation selon l'une quelconque des revendications 46 ou 47, dans des compositions de mortier sec, de préférence dans une colle pour carreaux, un mortier de réparation, un mortier de jointoiement, un mortier adhésif, un mortier d'armature ou un enduit.

49. Utilisation selon l'une quelconque des revendications 46 ou 47 dans des matériaux contenant des liants fluides et inorganiques, notamment dans des enduits auto-nivelants ou des chapes fluides.
